(19) **Europäisches Patentamt / European Patent Office / Office européen des brevets**

(11) **EP 4 610 302 A1**

(12) **EUROPEAN PATENT APPLICATION**
published in accordance with Art. 153(4) EPC

(43) Date of publication:
03.09.2025 Bulletin 2025/36

(21) Application number: 23906780.4

(22) Date of filing: 08.12.2023

(51) International Patent Classification (IPC):
*C08J 9/228* (2006.01) *C08J 9/16* (2006.01)

(52) Cooperative Patent Classification (CPC):
C08J 9/04; C08J 9/16; C08J 9/228

(86) International application number:
PCT/JP2023/044061

(87) International publication number:
WO 2024/135414 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.12.2022 JP 2022204514

(71) Applicant: JSP Corporation
Tokyo 100-0005 (JP)

(72) Inventors:
• TSUDA, Yuji
Kanuma-shi, Tochigi 322-0014 (JP)
• OHTA, Hajime
Kanuma-shi, Tochigi 322-0014 (JP)

(74) Representative: Kramer Barske Schmidtchen
Patentanwälte PartG mbB
European Patent Attorneys
Landsberger Strasse 300
80687 München (DE)

(54) **POLYETHYLENE RESIN FOAM PARTICLE MOLDED BODY AND METHOD FOR PRODUCING SAME**

(57) A method for producing a molded article of expanded beads by filling expanded beads (1) each having a tubular shape with a through-hole into a mold, and supplying a heating medium to fusion-bond the expanded beads (1) to each other. The expanded beads (1) each have a foamed layer including a polyethylene-based resin. A closed cell content of the expanded beads (1) is 80% or more. An average hole diameter (d) of the through-holes (11) in the expanded beads (1) is less than 1 mm. A ratio [d/D] of the average hole diameter (d) to an average outer diameter (D) of the expanded beads is 0.4 or less. An open cell content of the molded article of expanded beads is 8% or more and 20% or less.

FIG. 1

EP 4 610 302 A1

**Description**

TECHNICAL FIELD

The present invention relates to a molded article of polyethylene-based resin expanded beads in which expanded beads each having a tubular shape with a through-hole are mutually fusion-bonded, and a method for producing the same.

BACKGROUND ART

A molded article of polyethylene-based resin expanded beads is lightweight, flexible, and excellent in cushioning property, and thus is used for various applications. The molded article of polyethylene-based resin expanded beads is produced by, for example, a method called an in-mold molding method in which a mold is filled with polyethylene-based resin expanded beads, and then heated by steam. In the in-mold molding method, when steam is supplied into the mold, the expanded beads are secondarily expanded and surfaces thereof are melted. As a result, the expanded beads in the mold are mutually fusion-bonded, so that a molded article having a shape corresponding to a shape of a cavity of the mold can be obtained. The molded article immediately after molding tends to swell due to secondary expanding. Thus, the molded article is cooled with water, air, or the like in the mold and then released from the mold.

However, when the molded article after in-mold molding is stored at normal temperature, the steam that has flowed into cells of the molded article during in-mold molding is condensed in the cells, and the insides of the cells have a negative pressure, whereby volume shrinkage may occur in the molded article to largely deform the molded article. In particular, this phenomenon remarkably appears in a polyethylene-based resin expanded beads molded article having high resin flexibility. Accordingly, after demolding the molded article, an aging step is usually required, in which the molded article is left to stand for a predetermined period of time under a high-temperature atmosphere adjusted to a temperature of about 60°C to 80°C to recover the shape of the molded article. For example, in Patent Literature 1, the molded article after demolding is left to stand in an oven adjusted to an atmosphere of 60°C for 12 hours to perform aging.

In the in-mold molding of polyethylene-based resin expanded beads, a relatively long time is required for the aging step. Accordingly, it is desired to shorten the time required for the aging step to greatly improve productivity of the molded article. For example, Patent Literature 2 discloses a technique of fusion-bonding expanded beads each including a foamed layer and a cover layer while maintaining voids between the beads. Patent Literature 3 describes an aging method for a molded article of polyethylene-based resin expanded beads.

PRIOR ART LITERATURE

Patent Literature

    Patent Literature 1: JP 2022-141166 A
    Patent Literature 2: JP 2003-39565 A
    Patent Literature 3: JP S60-166442 A

SUMMARY OF INVENTION

PROBLEMS TO BE SOLVED BY INVENTION

However, in the technique described in Patent Literature 2, a large number of voids are formed between the expanded beads of the molded article, and thus the appearance of the molded article is significantly poor, and the rigidity is insufficient for some application. The technique described in the technique of Patent Literature 3 still requires an aging step for a long time, and when the aging time is further shortened, the molded article is significantly shrunk and deformed, making it difficult to obtain a molded article having a desired shape.

The present invention has been made in view of such a background, and is directed to providing a method for producing a polyethylene-based resin expanded beads molded article that can obtain an expanded beads molded article having a desired shape and being excellent in appearance and rigidity even when a time required for the aging step is shortened. In addition, the present invention is directed to providing an expanded beads molded article excellent in appearance and rigidity.

MEANS FOR SOLVING PROBLEMS

An aspect of the present invention is a method for producing a polyethylene-based resin expanded beads molded article according to the following [1] to [11].

[1] A method for producing a molded article of polyethylene-based resin expanded beads in which the polyethylene-based resin expanded beads each having a tubular shape with a through-hole are filled into a mold and a heating medium is supplied thereto to fusion-bond the expanded beads to each other, wherein

the expanded beads each have a foamed layer including a polyethylene-based resin,
a closed cell content of the expanded beads is 80% or more,
an average hole diameter d of the through-holes in the expanded beads is less than 1 mm, and a ratio [d/D] of the average hole diameter d to an average outer diameter D of the expanded beads is 0.4 or less, and
an open cell content of the molded article is 8% or more and 20% or less.

[2] The method for producing a molded article of polyethylene-based resin expanded beads according to [1], wherein an internal pressure of the expanded beads to be filled into the mold is 0 MPa (G) or more and 0.3 MPa (G) or less.
[3] The method for producing a molded article of polyethylene-based resin expanded beads according to [1] or [2], wherein an internal pressure of the expanded beads to be filled in the mold is 0.02 MPa (G) or more and 0.3 MPa (G) or less.
[4] The method for producing a molded article of polyethylene-based resin expanded beads according to any one of [1] to [3], wherein a melt mass flow rate MFRc of the polyethylene-based resin constituting the foamed layer is 0.1 g/10 min or more and 5 g/10 min or less as measured under conditions of a temperature of 190°C and a load of 2.16 kg.
[5] The method for producing a molded article of polyethylene-based resin expanded beads according to any one of [1] to [4], wherein the expanded beads each have a cover layer covering the foamed layer.
[6] The method for producing a molded article of polyethylene-based resin expanded beads according to [5], wherein the cover layer includes a polyethylene-based resin, and a melting point of the polyethylene-based resin constituting the cover layer is lower than a melting point of the polyethylene-based resin constituting the foamed layer.
[7] The method for producing a molded article of polyethylene-based resin expanded beads according to [5] or [6], wherein the cover layer includes a polyethylene-based resin, and a melt mass flow rate of the polyethylene-based resin constituting the cover layer is 8 g/10 min or more and 30 g/10 min or less as measured under conditions of a temperature of 190°C and a load of 2.16 kg.
[8] The method for producing a molded article of polyethylene-based resin expanded beads according to any one of [5] to [7], wherein the cover layer includes a polyethylene-based resin, and a difference [MFRs - MFRc] between a melt mass flow rate MFRs of the polyethylene-based resin constituting the cover layer as measured under conditions of a temperature of 190°C and a load of 2.16 kg and a melt mass flow rate MFRc of the polyethylene-based resin constituting the foamed layer as measured under conditions of a temperature of 190°C and a load of 2.16 kg is 5 g/10 min or more and 25 g/10 min or less.
[9] The method for producing a molded article of polyethylene-based resin expanded beads according to any one of [5] to [8], wherein the cover layer contains a polymeric antistatic agent, and a blending amount of the polymeric antistatic agent in the cover layer is 10 mass% or more and 45 mass% or less.
[10] The method for producing a molded article of polyethylene-based resin expanded beads according to any one of [1] to [9], wherein an average wall thickness t of the expanded beads represented by the following equation (1) in which the average outer diameter D and the average hole diameter d are used is 1.2 mm or more and 3 mm or less:

$$T = (D-d)/2 ... (1)$$

[11] The method for producing a molded article of polyethylene-based resin expanded beads according to any one of [1] to [10], wherein a density of the molded article is 10 kg/m$^3$ or more and 100 kg/m$^3$ or less.
Another aspect of the present invention is a molded article of polyethylene-based resin expanded beads according to the following [12].
[12] A molded article of polyethylene-based resin expanded beads each having a tubular shape with a through-hole and fusion-bonded to each other, wherein

a closed cell content of the molded article is 80% or more, and
an open cell content of the molded article is 8% or more and 20% or less.

EFFECTS OF INVENTION

According to the present invention, a polyethylene-based resin expanded beads molded article having a desired shape and being excellent in appearance and rigidity can be obtained even when the time required for the aging step is shortened. Thus, according to the production method, the production efficiency of the expanded beads molded article excellent in rigidity and appearance can be significantly improved.

BRIEF DESCRIPTION OF DRAWINGS

[Fig. 1] Fig. 1 is a schematic diagram of an appearance of an expanded bead.
[Fig. 2] Fig. 2 is a schematic cross-sectional view of an expanded bead including a foamed layer in a direction parallel to a penetration direction of a through-hole.
[Fig. 3] Fig. 3 is a schematic cross-sectional view of an expanded bead having a foamed layer and a cover layer in a direction parallel to a penetration direction of a through-hole.
[Fig. 4] Fig. 4 is an explanatory diagram showing a method for calculating an area of a high-temperature peak.

MODE FOR CARRYING OUT INVENTION

In the present specification, the polyethylene-based resin expanded beads are referred to as "expanded beads", and the molded article of polyethylene-based resin expanded beads is referred to as an "expanded beads molded article" or a "molded article" in some cases. It is noted that an expanded bead having a foamed layer including a polyethylene-based resin is generally called a polyethylene-based resin expanded bead.

(Method for producing molded article)

The expanded beads molded article is produced by performing a molding step in which a large number of expanded beads are filled into a mold and a heating medium such as steam is supplied so as to fusion-bond the expanded beads to each other. That is, a molded article can be obtained by in-mold molding of the expanded beads.

The shape of each of the expanded beads is a tubular shape having a through-hole. An average hole diameter d of the through-holes of the expanded beads is less than 1 mm, and a ratio [d/D] of the average hole diameter d to an average outer diameter D of the expanded beads is 0.4 or less. The expanded beads each have a foamed layer including a polyethylene-based resin. The expanded beads have a closed cell content of 80% or more. When such expanded beads are subjected to in-mold molding to produce a molded article having an open cell content of 8% or more and 20% or less, an expanded beads molded article having a desired shape and being excellent in appearance and rigidity can be obtained even when the time required for an aging step is shortened. Specifically, in the aging step, even when employing a condition in which the time required for the aging step is relatively short, such as allowing the molded article after demolding to stand at a temperature of about 60°C for 3 hours, the shape of the molded article can be stabilized.

It is noted that in the present specification, the "time required for the aging step" means a time during which the molded article after demolding is left to stand in a high-temperature atmosphere adjusted to a temperature of about 60°C to 80°C, and is also appropriately referred to as "aging time". The above-described condition for the aging step is one example, and the aging time can be set to, for example, 3 hours or longer. In addition, as described below, in the production method, pretreatment pressurization to apply an internal pressure to the expanded beads in advance before filling the expanded beads into the mold may be performed, or the pretreatment pressurization does not have to be performed. From the viewpoint of more reliably curtailing the dimensional change of the molded article when the aging time is shortened, it is preferable to perform pretreatment pressurization.

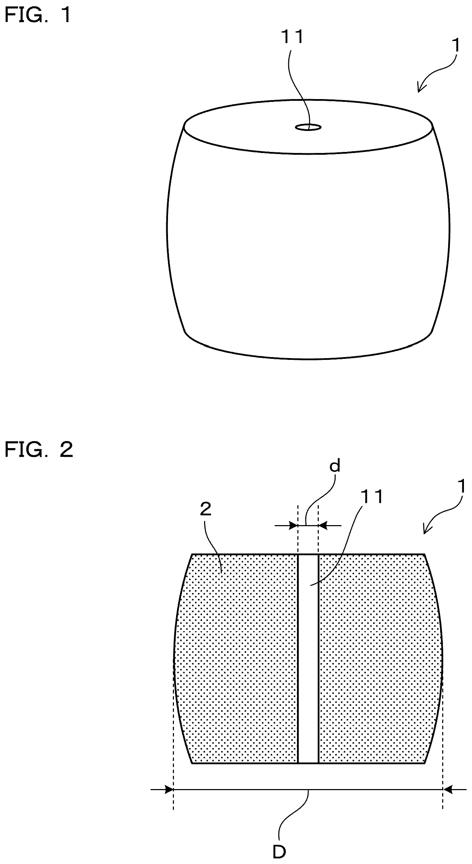

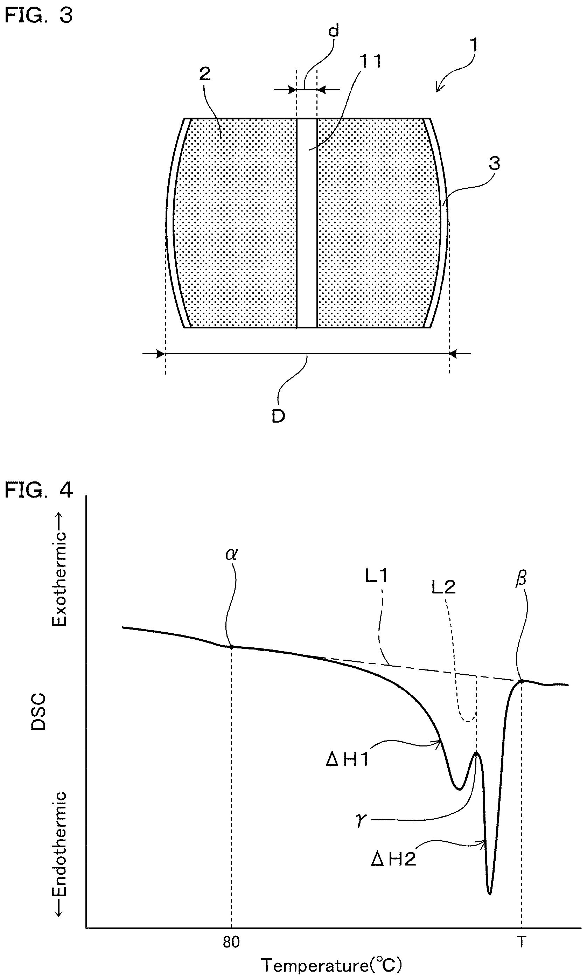

Fig. 1 to Fig. 3 each shows an example of an expanded bead, but the structure of the expanded bead used in the present invention is not limited to the structures illustrated in these drawings. As shown in Fig. 1 to Fig. 3, an expanded bead 1 has a tubular shape with a through-hole 11. The expanded bead 1 has a foamed layer 2 including a polyethylene-based resin. As shown in Fig. 2, the expanded bead 1 may have a single layer structure composed only of the foamed layer 2, or as shown in Fig. 3, may have a multilayer structure including the foamed layer 2 and a cover layer 3 covering the foamed layer 2. The expanded bead 1 preferably has the cover layer 3 covering the foamed layer 2.

The foamed layer includes a polyethylene-based resin. The foamed layer may contain one kind of polyethylene-based resin or two or more kinds of polyethylene-based resins. In the present specification, the polyethylene-based resin refers to a homopolymer of an ethylene monomer and an ethylene-based copolymer containing 50 mass% or more of structural units derived from ethylene. Specific examples of the polyethylene-based resin include low density polyethylene (PE-LD), linear low density polyethylene (PE-LLD), high density polyethylene (PE-HD), and ethylene-vinyl acetate copolymer (EVA). The low-density polyethylene is preferably a polyethylene-based resin having a long-chain branched structure and a density of 910 kg/m$^3$ or more and less than 930 kg/m$^3$. The linear low density polyethylene is preferably a polyethylene-based resin that is a copolymer of ethylene and an $\alpha$-olefin having 4 to 8 carbon atoms, and has a substantially linear molecular chain and a density of 910 kg/m$^3$ or more and less than 930 kg/m$^3$. The high density polyethylene is preferably a polyethylene-based resin that is an ethylene homopolymer or a copolymer of ethylene and an $\alpha$-olefin having 4 to 8 carbon atoms, and has a density of 930 kg/m$^3$ or more.

The foamed layer may contain a polymer other than the polyethylene-based resin, as long as the above-described action and effect are not impaired. Examples of the other polymer include thermoplastic resins other than polyethylene-based resin such as polypropylene-based resins and polystyrene-based resins, and elastomers. The amount of the polymer other than the polyethylene-based resin contained in the foamed layer is preferably 20 mass% or less, more preferably 10 mass% or less, still more preferably 5 mass% or less, particularly preferably 3 mass% or less, and 0, that is, it is most preferable that the foamed layer substantially contains only the polyethylene-based resin as a polymer.

The polyethylene-based resin constituting the foamed layer is preferably linear low-density polyethylene from the viewpoint of easily obtaining expanded beads capable of in-mold molding even without crosslinking.

A melting point Tmc of the polyethylene-based resin constituting the foamed layer is preferably 130°C or lower. In this case, it is possible to mold a molded article excellent in appearance and rigidity at a lower molding temperature (that is, at a low molding pressure). From the viewpoint of improving this effect, the melting point Tmc of the polyethylene-based resin constituting the foamed layer is preferably 125°C or lower, and more preferably 122°C or lower. On the other hand, from the viewpoint of further improving heat resistance, mechanical strength, and the like of the molded article, the melting point Tmc of the polyethylene-based resin constituting the foamed layer is preferably 110°C or higher, more preferably 115°C or higher, and still more preferably 118°C or higher.

In configuring a preferred range of the melting point Tmc of the polyethylene-based resin constituting the foamed layer, the upper limit and the lower limit of the melting point Tmc of the polyethylene-based resin described above can be arbitrarily combined. For example, the melting point Tmc of the polyethylene-based resin constituting the foamed layer may be 110°C or higher and 130°C or lower, 115°C or higher and 125°C or lower, or 118°C or higher and 122°C or lower.

The melting point Tmc of the polyethylene-based resin is determined in accordance with JIS K 7121:1987. Specifically, a test piece made of a polyethylene-based resin is prepared, and conditioned based on "(2) The case of measurement of melting temperature after a definite heat treatment" of "3. Conditioning of test piece" in JIS K 7121:1987. In the conditioning, the temperature range is set to 30°C to 200°C, and both the heating rate and the cooling rate are set to 10°C/min. The conditioned test piece is heated from 30°C to 200°C at a heating rate of 10°C/min to obtain a DSC curve, and a vertex temperature of the melting peak appearing in the DSC curve is taken as the melting point Tmc of the polyethylene-based resin. It is noted that in a case where a plurality of melting peaks appears in the DSC curve, the vertex temperature of the melting peak with the largest area is taken as the melting point Tmc of the polyethylene-based resin.

From the viewpoint of further improving expandability and moldability, a melt mass flow rate (that is, MFR) of the polyethylene-based resin constituting the foamed layer is preferably 0.1 g/10 min or more, more preferably 0.5 g/10 min or more, and still more preferably 0.8 g/10 min or more. On the other hand, from the viewpoint of curtailing a decrease in the closed cell content of the expanded beads and further improving the moldability, the MFR of the polyethylene-based resin constituting the foamed layer is preferably 5 g/10 min or less, more preferably 3 g/10 min or less, and still more preferably 1.5 g/10 min or less. It is noted that the MFR of the polyethylene-based resin constituting the foamed layer may be referred to as "MFRc" hereinafter.

In configuring a preferred range of the MFR of the polyethylene-based resin constituting the foamed layer, the upper limit and the lower limit of the MFRc of the polyethylene-based resin described above can be arbitrarily combined. For example, the MFR of the polyethylene-based resin constituting the foamed layer may be 0.1 g/10 min or more and 5 g/10 min or less, 0.5 g/10 min or more and 3 g/10 min or less, or 0.8 g/10 min or more and 1.5 g/10 min or less.

It is noted that the MFR of the polyethylene-based resin constituting the foamed layer is a value measured under conditions of a test temperature of 190°C and a load of 2.16 kg in accordance with JIS K 7210-1:2014.

A flexural modulus of the polyethylene-based resin constituting the foamed layer is preferably 100 MPa or more and 500 MPa or less, and more preferably 200 MPa or more and 350 MPa or less. In the past, in a case where the expanded beads including a polyethylene-based resin are subjected to in-mold molding, the molded article tends to be significantly shrunk and deformed when the aging time is shortened, probably because the resin has a low flexural modulus and resistance against shrinkage and deformation after demolding is small. On the other hand, according to the method for producing a molded article described above, for example, even when the flexural modulus of the polyethylene-based resin constituting the foamed layer is within the above-described range, the aging time can be easily shortened while curtailing shrinkage and deformation of the molded article after demolding.

From the viewpoint of enhancing the rigidity of the molded article and from the viewpoint of more reliably curtailing the dimensional change when the aging time is shortened, the flexural modulus of the polyethylene-based resin constituting the foamed layer is preferably 120 MPa or more, more preferably 150 MPa or more, and still more preferably 200 MPa or more. On the other hand, from the viewpoint of enabling molding of a molded article excellent in appearance and rigidity at a lower molding temperature (that is, low molding pressure), the flexural modulus of the polyethylene-based resin constituting the foamed layer is preferably less than 450 MPa, more preferably 400 MPa or less, and still more preferably 350 MPa or less.

In configuring a preferred range of the flexural modulus of the polyethylene-based resin constituting the foamed layer, the upper limit and the lower limit of the flexural modulus of the polyethylene-based resin described above can be arbitrarily combined. For example, the flexural modulus of the polyethylene-based resin constituting the foamed layer may be 120 MPa or more and less than 450 MPa, 150 MPa or more and 400 MPa or less, or 200 MPa or more and 350 MPa or less.

It is noted that the flexural modulus of the polyethylene-based resin can be determined in accordance with JIS K 7171:2008.

A closed cell content of the expanded beads is 80% or more. From the viewpoint of ensuring good in-mold moldability of the expanded beads, and from the viewpoint of further improving the appearance and rigidity of the expanded beads, the closed cell content of the expanded beads is preferably 82% or more, and more preferably 85% or more.

The closed cell content of the expanded beads can be measured using an air-comparison pycnometer based on ASTM-D 6226-10. The method for measuring the closed cell content of the expanded beads is specifically as follows. Expanded beads having a bulk volume of about 20 cm$^3$ after conditioning are used as a measurement sample to measure an apparent volume Va accurately by an ethanol immersion method as described below. After the measurement sample whose apparent volume Va has been measured is sufficiently dried, a true volume Vx of the measurement sample is measured using an air-comparison pycnometer ("AccuPyc II 1340" manufactured by Shimadzu Corporation) in accordance with the procedure described in ASTM-D 6226-10. It is noted that in the measurement of the true volume Vx, the pressure applied in the purging step and the testing step is set to 5 kPa. In addition, in procedures 9.13 and 9.14, the pressure is recorded after waiting until the change rate of pressure reaches 0.100 kPa/min or less.

Using the apparent volume Va and the true volume Vx thus obtained, the closed cell content (unit: %) of the measurement sample is calculated on the basis of the following equation (2). The above operation is performed for each of five measurement samples, and the arithmetic average value of the closed cell contents obtained for the five measurement samples is taken as the closed cell content of the expanded beads.

$$\text{Closed cell content} = (Vx - W/\rho) \times 100/(Va - W/\rho)... (2)$$

It is noted that the meanings of the symbols in the above equation (2) are as follows.

Vx: True volume of the measurement sample measured by the method described above, that is, the sum of the volume of the resin constituting the expanded beads and the total cell volume of the closed cell portion in the expanded beads (unit: cm$^3$)
Va: Apparent volume of the measurement sample measured from increase in liquid level when the measurement sample is immersed in a measuring cylinder containing ethanol (unit: cm$^3$)
W: Mass of the measurement sample (unit: g)
$\rho$: Density of the resin constituting expanded beads (unit: g/cm$^3$)

The molded article has an open cell structure. The open cell structure is a minute space portion communicating with the outside of the molded article. The open cell structure is formed by complicatedly connecting voids formed by allowing through-holes of a plurality of expanded beads to communicate with each other, voids formed by allowing the through-holes of the expanded beads to communicate with voids between the expanded beads, voids formed by allowing voids between the expanded beads to communicate with each other, open cell portions of the expanded beads constituting the molded article, and the like.

In the production method, a molded article having an open cell content of 8% or more and 20% or less is produced. As a result, even when the aging time is shortened, significant shrinkage, deformation, and the like are curtailed, and a molded article having a desired shape and being excellent in appearance and rigidity can be produced. This is considered to be because air quickly flows into the cells in the molded article to thereby increase the internal pressure of the entire molded article when the molded article molded so as to have the open cell content in the specific range described above is demolded, so that the dimensions of the molded article are likely to be stabilized early. In a case where the open cell content of the molded article is less than 8%, the molded article may be significantly shrunk and deformed when the aging time is shortened, and it may become difficult to obtain a molded article having a desired shape.

From the viewpoint that significant shrinkage, deformation, and the like of the molded article can be further suppressed even when the aging time is shortened, the open cell content of the molded article is preferably 9% or more, more preferably 10% or more, still more preferably 12% or more, and particularly preferably more than 12%. On the other hand, when the open cell content of the molded article exceeds 20%, the appearance of the molded article may be remarkably deteriorated. In addition, in this case, the rigidity of the molded article may decrease. From the viewpoint that the appearance and rigidity of the molded article can be further improved, the open cell content of the molded article is preferably 18% or less, more preferably 15% or less, and still more preferably less than 15%.

In configuring a preferred range of the open cell content of the molded article, the upper limit and the lower limit of the open cell content of the molded article described above can be arbitrarily combined. For example, the open cell content of the molded article may be 9% or more and 18% or less, 10% or more and 15% or less, 12% or more and less than 15%, or more than 12% and less than 15%.

The open cell content of the molded article is obtained in accordance with ASTM6226-10, and in the measurement, the influence of closed cells broken at the time of cutting out the measurement sample is corrected according to Procedure 2 described in Supplement X1.3 of the same standard.

The method for measuring the open cell content of the molded article is specifically as described below. First, the molded article is conditioned by allowing the molded article to stand in an atmosphere at 23°C for 12 hours. Next, a first test piece having a cubic shape of 2.5 cm long × 2.5 cm wide × 2.5 cm high is cut out from a central portion of the molded article, and its geometric volume Va (unit: cm$^3$) is measured. Specifically, Va is a product of a longitudinal dimension (unit: cm), a lateral dimension (unit: cm), and a height dimension (unit: cm) of the first test piece.

Next, a true volume V1 (unit: cm$^3$) of the first test piece is measured using a dry automatic densitometer (specifically, "AccuPyc II 1340" manufactured by Shimadzu Corporation). At the time, the pressure applied in the purging step and the testing step is 5 kPa. In addition, in procedures 9.13 and 9.14, the pressure is recorded after waiting until the change rate of pressure reaches 0.100 kPa/min or less.

After measuring the geometric volume Va and the true volume V1 of the first test piece, the first test piece is divided into 8 equal parts to prepare second test pieces each having a cubic shape of 1.25 cm long × 1.25 cm wide × 1.25 cm high. Next, a true volume (unit: cm$^3$) of the second test pieces are individually measured by the same method for measuring the true volume V1 of the first test piece. The open cell content (unit: %) of the first test piece is calculated on the basis of the following equation (3) using the geometric volume Va of the first test piece, the true volume V1 of the first test piece, and the sum V2 (unit: cm$^3$) of the true volumes of the eight second test pieces thus obtained.

$$\text{Open cell content} = (Va - 2V1 + V2) \times 100/Va \dots (3)$$

The above operation is performed for each of the five first test pieces cut out from the molded article, and a value obtained by arithmetically averaging the open cell contents of the five first test pieces is taken as an open cell content Co of the molded article. The open cell content Co thus measured may be referred to as a corrected open cell content or a corrected continuous cell content.

It is noted that, as described above, the open cell content Co in the present specification is a physical property value measured in accordance with ASTM6226-10, with the influence of cutting out of a sample being corrected according to Procedure 2 described in Supplement X1.3, and is a physical property value that cannot be calculated based on a closed cell content Bp of the molded article measured in accordance with ASTM6226-10. That is, the open cell content Co of the molded article described above has a relationship of the following equation (4) with the closed cell content Bp of the molded article measured in accordance with ASTM6226-10. It is noted that a specific method for measuring the closed cell content Bp of the molded article will be described below.

$$Co \neq 100\text{-}Bp \dots (4)$$

In the measurement of the open cell content Co, the influence of closed cells broken at cutting out the test piece is corrected as described above. In contrast, in the closed cell content Bp of the molded article measured in accordance with the method described in ASTM6226-10, the influence of closed cells broken at cutting out the test piece is not corrected. Accordingly, the open cell content Co of the molded article is a physical property value having a concept different from the closed cell content Bp. The proportion of closed cells broken at cutting out the test piece is greatly affected by shapes (that is, presence or absence of a through-hole, a hole diameter of the through-hole, and the like) of the expanded beads constituting the molded article of the expanded beads and the closed cell content of the expanded beads. Furthermore, the proportion of closed cells broken at cutting out the test piece is also affected by molding conditions (that is, a molding pressure, an internal pressure of expanded beads, a filling method, and the like) of the molded article of the expanded beads and the like. Thus, it is also difficult to estimate the value of the open cell content Co based on the value of the closed cell content Bp of the molded article measured in accordance with ASTM6226-10. It is noted that since the closed cell content of the molded article measured in accordance with ASTM2856-70 Procedure C is technically equivalent to the closed cell content Bp of the molded article measured in accordance with ASTM6226-10, it is also difficult to estimate the value of the open cell content Co based on the value of the closed cell content of the molded article measured in accordance with ASTM2856-70 Procedure C.

The open cell content Co in the present specification is a physical property value having a concept different from a voidage of the molded article. The voidage of the molded article is measured and calculated, for example, as follows. Specifically, first, a test piece having a rectangular parallelepiped shape (20 mm long × 100 mm wide × 20 mm high) is cut out from a central portion of the molded article. Next, the test piece is immersed in ethanol contained in a measuring cylinder, and a true volume Vc (unit: L) of the test piece is determined from the increase in the liquid level of ethanol. In addition, an apparent volume Vd (unit: L) is obtained from the outer dimension of the test piece. The voidage (unit: %) of the molded article is expressed by the following equation (5) using the true volume Vc and the apparent volume Vd of the test piece obtained as described above.

$$\text{Voidage} = [(\text{Vd} - \text{Vc})/\text{Vd}] \times 100 \ldots (5)$$

In this way, in measurement of the voidage of the molded article as well, the influence of closed cells broken at cutting out the test piece is not considered. In addition, the method for measuring the voidage is different from the method for measuring the open cell content Co described above in that a liquid such as ethanol is used as a medium for measurement. Thus, it is also difficult to estimate the value of the open cell content Co based on the value of the voidage of the molded article measured by the above method.

A molded article having an open cell content of 8% or more and 20% or less is produced by in-mold molding of expanded beads satisfying the following (1) to (3).

(1) The expanded beads each have a through-hole. In a case where the expanded beads have no through-hole, it is difficult to set the value of the open cell content of the molded article to 8% or more.

(2) The average hole diameter d of the through-holes of the expanded beads is set to less than 1 mm. The open cell content tends to decrease by reducing the average hole diameter, and the open cell content tends to increase by enlarging the average hole diameter. In the case where the average hole diameter d of the through-holes is 1 mm or more, it tends to be difficult to set the value of the open cell content of the molded article to 20% or less.

(3) The ratio [d/D] of the average hole diameter d of the through-holes to an average outer diameter D of the expanded beads is set to 0.4 or less. The open cell content tends to decrease by decreasing the ratio [d/D], and the open cell content tends to increase by increasing the ratio [d/D]. In a case where the ratio [d/D] exceeds 0.4, it tends to be difficult to set the value of the open cell content of the molded article to 20% or less.

When the open cell content of the molded article is 8% or more and 20% or less, the dimensions of the molded article are easily stabilized even when short-time aging, and a molded article having good appearance and rigidity can be obtained. The effect of shortening the aging time and the appearance and rigidity of the molded article can be further improved, for example, by controlling the following conditions in the in-mold molding in addition to the in-mold molding using the expanded beads satisfying the above (1) to (3).

In the production method, it is also possible to perform in-mold molding by filling a mold with expanded beads having no internal pressure applied, but from the viewpoint of more reliably curtailing a dimensional change of the molded article when the aging time is shortened, it is preferable to perform a pretreatment pressurization step of applying an internal pressure in advance to the expanded beads before being filled in the mold. When an internal pressure is applied to the expanded beads before being filled in the mold in the pretreatment pressurization step, the expanded beads are likely to be secondarily expanded during molding, so that the appearance of the obtained molded article tends to be improved. In addition, since the internal pressure of the molded article immediately after demolding tends to increase, the dimensional stability of the molded article tends to be improved when the aging time is shortened.

It is noted that the polyethylene-based resin expanded beads have a property of higher secondary expandability than other thermoplastic resin expanded beads such as, for example, polypropylene-based resin expanded beads. Hence, conventionally, the secondary expandability of the expanded beads becomes excessively high depending on the height of the internal pressure applied in the pretreatment pressurization step, so that steam hardly reaches the inside of the mold, and the fusion-bonding rate of the central portion of the molded article may be significantly reduced. In contrast, the expanded beads used for in-mold molding in the present invention have a secondary expandability appropriately adjusted by a predetermined through-hole provided therein so as to satisfy the above (1) to (3). By using such expanded beads for in-mold molding, steam easily reaches the inside of the mold. Furthermore, since the through-holes of the expanded beads also serve as a passage for steam, a molded article having a high fusion-bonding rate can be obtained even when the amount of internal pressure applied in the pretreatment pressurization step is increased. In addition, the water cooling time is prevented from becoming excessively long.

From the viewpoint of further increasing the fusion-bonding rate of the molded article, the internal pressure of the expanded beads to be filled in the mold is preferably 0.5 MPa (G) or less, more preferably 0.3 MPa (G) or less, and still more preferably 0.2 MPa (G) or less in terms of gauge pressure. On the other hand, in the production method, although it is possible to perform in-mold molding using expanded beads having an internal pressure of 0 MPa (G), that is, expanded beads having no internal pressure applied, it is possible to more easily stabilize the dimensions and to obtain a molded article having a better appearance by in-mold molding using expanded beads having an internal pressure applied in advance, even in the case of employing short-time aging. From such a viewpoint, the internal pressure of the expanded beads to be filled in the mold is preferably 0.01 MPa (G) or more, more preferably 0.02 MPa (G) or more, still more preferably 0.05 MPa (G) or more, and particularly preferably 0.08 MPa (G) or more in terms of gauge pressure.

In configuring a preferred range of the internal pressure of the expanded beads, the upper limit and the lower limit of the internal pressure of the expanded beads described above can be arbitrarily combined. For example, the internal pressure of the expanded beads filled in the mold may be 0 MPa (G) or more and 0.5 MPa (G) or less, 0 MPa (G) or more and 0.3 MPa (G) or less, 0.02 MPa (G) or more and 0.3 MPa (G) or less, 0.05 MPa (G) or more and 0.3 MPa (G) or less, or 0.08 MPa (G) or more and 0.2 MPa (G) or less.

In the production method, in order to efficiently fill the expanded beads in an amount exceeding the volume in the mold when filling the expanded beads into the mold, a method called a cracking filling method can be employed in which an opening portion of a mold is provided so as not to completely close the mold. In the cracking filling method, an opening portion of a mold is called cracking, and a ratio of a volume of the opening portion to a volume in the mold is represented as a cracking amount (unit:%). It is noted that the cracking is finally closed at the time of introducing steam after the expanded beads are filled into the mold, and the filled expanded beads are mechanically compressed accordingly.

In a case where expanded beads are filled in a mold by the cracking filling method, when the cracking amount is increased, gaps between the expanded beads are likely to be filled, so that the open cell content tends to be decreased. And when the cracking amount is decreased, gaps between the expanded beads are likely to be formed, so that the open cell content tends to be increased. In the case of employing the cracking filling method, the cracking amount is preferably in a range of 5% or more and 35% or less, more preferably in a range of 8% or more and 30% or less, and still more preferably in a range of 10% or more and 25% or less.

Further, expanded beads can also be filled in a mold and molded by a compression filling molding method (refer to JP-B-04-46217).

When the molding temperature (specifically, the molding pressure) is lowered, the open cell content tends to increase. When the molding temperature (specifically, the molding pressure) is excessively high, the open cell content also tends to increase. From such a viewpoint, the molding pressure is preferably in a range of 0.05 MPa (G) or more and 0.18 MPa (G) or less, more preferably in a range of 0.06 MPa (G) or more and 0.15 MPa (G) or less, and still more preferably in a range of 0.08 MPa (G) or more and 0.12 MPa (G) or less, in terms of gauge pressure.

It is noted that the above-described production conditions are examples, and when expanded beads are molded so that the open cell content of the finally obtained molded article is 8% or more and 20% or less, a molded article having a desired shape and being excellent in appearance and rigidity can be obtained even when the aging time is shortened.

As illustrated in Fig. 3, the expanded bead preferably has a multilayer structure including a foamed layer 2 and a cover layer 3 covering the foamed layer 2. In the case where an expanded bead has a cover layer, the cover layer includes, for example, a polyethylene-based resin. As the polyethylene-based resin constituting the cover layer, for example, the same polyethylene-based resin as the polyethylene-based resin used for the foamed layer described above can be used. The polyethylene-based resin constituting the cover layer is preferably linear low-density polyethylene from the viewpoint of adhesiveness with the foamed layer.

The polyethylene-based resin constituting the cover layer preferably has a melting point Tms lower than the melting point Tmc of the polyethylene-based resin constituting the foamed layer. That is, Tms < Tmc is preferably satisfied. In this case, the fusion bondability of the expanded beads is improved, and molding at a lower temperature is made possible. Furthermore, in this case, significant shrinkage and deformation when the aging time is shortened can be more easily curtailed. The reason for this is not clear, but it is considered that by molding at a lower temperature, the heat received by the expanded beads from the heating medium such as steam can be further reduced, and dimensional change of the molded article due to thermal shrinkage is more easily curtailed. From the viewpoint of further reliably obtaining the effect described above, Tmc - Tms ≥ 1 is preferably satisfied, Tmc-Tms ≥ 3 is more preferably satisfied, and Tmc-Tms ≥ 5 is still more preferably satisfied. From the viewpoint of further curtailing peeling between the foamed layer and the cover layer, adhesion between the expanded beads, or the like, Tmc - Tms ≤ 35 is preferably satisfied, Tmc - Tms ≤ 20 is more preferably satisfied, and s Tmc - Tms ≤ 15 is still more preferably satisfied.

In configuring a preferred range of the difference Tmc - Tms of Tmc and Tms, the upper limit and the lower limit of the value of Tmc - Tms described above can be arbitrarily combined.

From the viewpoint of further improving the fusion bondability of expanded beads during molding, the melting point Tms of the polyethylene-based resin constituting the cover layer is preferably 100°C or higher and 125°C or lower, and more preferably 105°C or higher and 122°C or lower. The method for measuring the melting point Tms of the polyethylene-based resin constituting the cover layer is the same as the method for measuring the melting point Tmc of the polyethylene-based resin constituting the foamed layer described above, except that a test piece made of the polyethylene-based resin constituting the cover layer is used instead of the test piece made of the polyethylene-based resin constituting the foamed layer.

From the viewpoint of reliably curtailing the peeling between the foamed layer and the cover layer, a melt mass flow rate of the polyethylene-based resin constituting the cover layer is preferably 2 g/10 min or more, more preferably 5 g/10 min or more, and still more preferably 8 g/10 min or more. From the same viewpoint, the melt mass flow rate of the polyethylene-based resin constituting the cover layer is preferably 30 g/10 min or less, more preferably 25 g/10 min or less, and still more preferably 20 g/10 min or more. In configuring a preferred range of the melt mass flow rate of the polyethylene-based resin constituting the cover layer, the upper limit and the lower limit of the melt mass flow rate of the polyethylene-based resin described above can be arbitrarily combined. For example, the preferred range of the melt mass flow rate of the polyethylene-based resin constituting the cover layer may be 2 g/10 min or more and 30 g/10 min or less, 5 g/10 min or more and 25 g/10 min or less, 8 g/10 min or more and 30 g/10 min or less, or 8 g/10 min or more and 20 g/10 min or less. It is noted that hereinafter, the melt mass flow rate of the polyethylene-based resin constituting the cover layer may be referred to as "MFRs".

From the viewpoint of providing the cover layer more uniformly on the foamed layer, the MFRs is preferably larger than the melt mass flow rate (that is, MFRc) of the polyethylene-based resin constituting the foamed layer. Specifically, MFRs - MFRc $\geq$ 5 g/10 min is preferable, and MFRs - MFRc $\geq$ 8 g/10 min is more preferable. From the viewpoint of enhancing the production stability of the resin particles, MFRs - MFRc $\leq$ 25 g/10 min is preferable, and MFRs - MFRc $\leq$ 20 g/10 min is more preferable. In configuring a preferred range of MFRs - MFRc, the upper limit and the lower limit of MFRs - MFRc described above can be arbitrarily combined. For example, the preferred range of MFRs - MFRc may be 5 g/10 min or more and 25 g/10 min or less, or may be 8 g/10 min or more and 20 g/10 min or less. The MFRs of the polyethylene-based resin constituting the cover layer is a value measured under conditions of a test temperature of 190°C and a load of 2.16 kg on the basis of JIS K 7210-1:2014.

The cover layer preferably contains a polymeric antistatic agent. Examples of the polymeric antistatic agent include a polyether-polyolefin block copolymer. A blending amount of the polymeric antistatic agent in the cover layer is preferably 10 mass% or more and 45 mass% or less, and more preferably 20 mass% or more and 35 mass% or less. When the polymeric antistatic agent is contained in the cover layer, antistatic performance can be imparted to the molded article. Usually, the melting point of the polymeric antistatic agent is higher than that of the polyethylene-based resin, and the molding pressure for molding of expanded beads containing the polymeric antistatic agent tends to be high. On the other hand, since the expanded beads described above each have the specific through-hole, even when the expanded beads contain a polymeric antistatic agent, an increase in molding pressure is curtailed, and an increase in water cooling time is curtailed.

A melting point Tma of the polymeric antistatic agent is preferably 130°C or higher and 180°C or lower, and more preferably 145°C or higher and 170°C or lower. From the viewpoint of excellent antistatic performance while maintaining the fusion bondability between expanded beads, the difference between the melting point Tmc of the polyethylene-based resin constituting the foamed layer and the melting point Tma of the polymeric antistatic agent is preferably $25 \leq$ Tmc - Tma $\leq 75$, and more preferably $35 \leq$ Tmc - Tma $\leq 55$. A method for measuring the melting point Tma of the polymeric antistatic agent is the same as the method for measuring the melting point Tmc of the polyethylene-based resin constituting the foamed layer described above except that a test piece made of the polymeric antistatic agent is used instead of the test piece made of the polyethylene-based resin constituting the foamed layer.

In the case where the expanded beads are each a particle with a multilayer structure including a foamed layer and a cover layer that covers the foamed layer, the cover layer may be composed of a polyethylene-based resin in a foamed state, or may be composed of a polyethylene-based resin in a non-foamed state. The cover layer is preferably substantially in a non-foamed state. "Substantially in a non-foamed state" includes a state in which no cell is contained because the cover layer is not expanded, and a state in which cells disappear after expanding, and means that there is almost no cell structure. A thickness of the cover layer is, for example, 0.5 $\mu$m or more and 100 $\mu$m or less. In addition, an intermediate layer may be further provided between the foamed layer and the cover layer.

A mass ratio (ratio of mass%) of the resin constituting the foamed layer to the resin constituting the cover layer is preferably resin constituting foamed layer : resin constituting cover layer = 99.5 : 0.5 to 80 : 20, more preferably 99 : 1 to 85 : 15, and still more preferably 97 : 3 to 90 : 10, from the viewpoint of enhancing the moldability while maintaining the rigidity of the molded article.

The expanded beads each preferably have a crystal structure in which an endothermic peak due to melting inherent to the polyethylene-based resin constituting the foamed layer and one or more melting peaks located on a higher temperature side than the endothermic peak appear in a DSC curve obtained when heated from 23°C to 200°C at a heating rate of 10°C/min. It is noted that hereinafter, the endothermic peak due to melting inherent to the polyethylene-based resin appearing in the DSC curve is referred to as a "resin intrinsic peak", and a melting peak appearing on a higher temperature side than the resin intrinsic peak is referred to as a "high-temperature peak".

The resin intrinsic peak is an endothermic peak inherent to the polyethylene-based resin constituting the foamed layer, and is considered to be generated by the endotherm at the time of melting of the crystal originally possessed by the polyethylene-based resin. On the other hand, it is presumed that the high-temperature peak is generated by melting of secondary crystals formed in the polyethylene-based resin constituting the foamed layer.

Whether or not the expanded beads have the above-described crystal structure can be determined based on a DSC curve obtained by performing differential scanning calorimetry (DSC) under the above-described conditions in accordance with JIS K 7121:1987. In performing DSC, 1 to 3 mg of the expanded beads can be used as a sample.

Specifically, in the DSC curve obtained when heating from 23°C to 200°C (that is, first heating) is performed at a heating rate of 10°C/min as described above, both a high-temperature peak and a resin intrinsic peak of the polyethylene-based resin constituting the foamed layer appear. On the other hand, in the DSC curve obtained by performing the first heating, then cooling from 200°C to 23°C at a cooling rate of 10°C/min, and then heating from 23°C to 200°C again at a heating rate of 10°C/min (that is, second heating), only the resin intrinsic peak of the polyethylene-based resin constituting the expanded beads appears. Thus, when the DSC curve obtained at the time of the first heating is compared with the DSC curve obtained at the time of the second heating, the resin intrinsic peak and the high-temperature peak can be distinguished. The vertex temperature of the resin intrinsic peak may be slightly different between the first heating and the second heating, but the difference is usually within 5°C.

A heat of fusion of the high-temperature peak of the expanded beads is preferably 10 J/g or more and 40 J/g or less, more preferably 12 J/g or more and 35 J/g or less, and still more preferably 15 J/g or more and 30 J/g or less from the viewpoint of further improving the moldability of the expanded beads and obtaining a molded article more excellent in rigidity. A ratio of the heat of fusion of the high-temperature peak to the heat of fusion of the entire melting peaks of the DSC curve (the heat of fusion of the high-temperature peak/the heat of fusion of the entire melting peaks) is preferably 0.05 or more and 0.3 or less, more preferably 0.1 or more and 0.25 or less, and still more preferably 0.15 or more and 0.2 or less.

It is considered that the mechanical strength and the in-mold moldability of the expanded beads can be further improved by setting the ratio between the heat of fusion of the high-temperature peak and the heat of fusion of the entire melting peaks within such a range.

The heat of fusion of each peak of the expanded beads in the DSC curve described above is a value obtained as follows. First, one expanded bead is collected from the expanded beads after conditioning. The expanded bead is used as a test piece to obtain a DSC curve when the test piece is heated from 23°C to 200°C at a heating rate of 10°C/min by a differential scanning calorimeter. Fig. 4 shows an example of the DSC curve. As shown in Fig. 4 as an example, a resin intrinsic peak $\Delta H1$ and a high-temperature peak $\Delta H2$ having a vertex on a higher temperature side than a vertex of the resin intrinsic peak $\Delta H1$ appear in the DSC curve.

Next, a straight line L1 connecting a point $\alpha$ corresponding to a temperature of 80°C and a point $\beta$ corresponding to a melting end temperature T of the expanded bead is drawn on the DSC curve. It is noted that the melting end temperature T is an end point on the high temperature side in the high-temperature peak $\Delta H2$, that is, an intersection of the high-temperature peak $\Delta H2$ and a baseline on the higher temperature side than the high-temperature peak $\Delta H2$ in the DSC curve. After the straight line L1 is drawn, a straight line L2 that passes through a maximum point $\gamma$ existing between the resin intrinsic peak $\Delta H1$ and the high-temperature peak $\Delta H2$ and is parallel to the vertical axis of the graph is drawn. The straight line L2 divides the resin intrinsic peak $\Delta H1$ and the high-temperature peak $\Delta H2$.

A heat of fusion of the resin intrinsic peak $\Delta H1$ can be calculated based on an area of a region surrounded by a portion constituting the resin intrinsic peak $\Delta H1$ in the DSC curve, the straight line L1, and the straight line L2. A heat of fusion of the high-temperature peak $\Delta H2$ can be calculated based on an area of a region surrounded by a portion constituting the high-temperature peak $\Delta H2$ in the DSC curve, the straight line L1, and the straight line L2. A heat of fusion of the entire melting peaks can be calculated based on an area of a region surrounded by a portion constituting the resin intrinsic peak $\Delta H1$ in the DSC curve, a portion constituting the high-temperature peak $\Delta H2$, and the straight line L1.

The expanded beads each have a through-hole as described above. It is preferable that the expanded bead has, as the through-hole, at least one tubular hole penetrating the expanded bead with a columnar shape such as a circular column shape or a rectangular column shape in the axial direction thereof. It is more preferable that the expanded bead has a circular column shape and has a tubular hole as the through-hole penetrating in the axial direction thereof.

In a case where the expanded beads have no through-hole, the open cell content of the molded article is likely to decrease to less than 8%. As a result, when the aging time is shortened, there is a possibility that significant shrinkage and deformation of the molded article cannot be curtailed. If it is desired to increase the open cell content of the molded article using expanded beads with no through-hole, for example, the molding pressure is lowered to actively form voids between the expanded beads. However, in this case, the appearance and rigidity of the molded article may significantly decrease. In addition, in the case of in-mold molding of expanded beads having no through-hole, when the amount of internal pressure applied in the pretreatment pressurization step is increased, the secondary expandability of the expanded beads is excessively increased, so that the fusion-bonding rate of the resulting molded article may be significantly reduced. In addition, the water cooling time may become long.

On the other hand, even when the expanded beads have through-holes, when the average hole diameter d is too large, the open cell content of the molded article tends to increase to, for example, more than 20%. As a result, the appearance and rigidity of the molded article may decrease. If it is desired to reduce the open cell content of the molded article using expanded beads having an excessively large average hole diameter d, for example, it is conceivable to sufficiently increase the molding pressure. However, in this case, the molded article may be thermally shrunk to impair dimensional stability. In addition, when the molding pressure is excessively increased, the polyethylene-based resin expanded beads are thermally shrunk to increase voids between the expanded beads, and there is a possibility that a molded article having a desired open cell content cannot be obtained.

By setting the average hole diameter d of the expanded beads to less than 1 mm, the above-described problem can be easily avoided. From the viewpoint of obtaining a molded article with a desired shape and obtaining a molded article more excellent in appearance and rigidity even when the aging time is shortened, the average hole diameter d of the expanded beads is preferably 0.95 mm or less, more preferably 0.90 mm or less, and still more preferably 0.85 mm or less. It is noted that from the viewpoint of more easily adjusting the value of the open cell content of the molded article, the average hole diameter d of the expanded beads is preferably 0.2 mm or more, and more preferably 0.4 mm or more.

In configuring a preferred range of the average hole diameter d of the expanded beads, the upper limit and the lower limit of the average hole diameter d of the expanded beads described above can be arbitrarily combined. For example, the preferred range of the average hole diameter d of the expanded beads may be 0.2 mm or more and less than 1 mm, 0.2 mm or more and 0.95 mm or less, 0.2 mm or more and 0.90 mm or less, or 0.4 mm or more and 0.85 mm or less.

The average hole diameter d of the expanded beads can be adjusted by mainly adjusting a hole diameter dr of a through-hole in a resin particle described below. In addition, the average hole diameter d can be adjusted by adjusting the apparent density of the expanded beads and the heat of fusion of the high-temperature peak. In addition, when the expanded beads are formed into a second-step expanded beads produced by two-step expansion, the average hole diameter d can be more easily adjusted to a small value.

The average hole diameter d of the through-holes of the expanded beads is determined as follows. 50 or more expanded beads randomly selected from the expanded bead group are cut perpendicularly to the penetration direction of each of the through-holes at a position where the area of the cut surface is roughly maximum. A photograph of the cut surface of each expanded bead was taken, and the cross-sectional area (that is, opening area of the through-hole in the cross section) of the through-hole portion is obtained. Then, a diameter of a virtual perfect circle having the same area as the cross-sectional area of the through-hole portion is calculated, and this value is defined as the hole diameter of each through-hole. An arithmetic average value of the hole diameters of the through-holes of 50 or more expanded beads thus obtained is taken as the average hole diameter d of the through-holes of the expanded beads. It is noted that even in a case where the hole diameter of the through-hole of each of the expanded beads is not uniform in the penetration direction, the hole diameter of the through-hole of each of the expanded beads is determined by the hole diameter at the position where the area of the cut surface of the expanded bead is roughly maximum as described above.

From the viewpoint that the wall thicknesses of the tubular expanded beads increase and the secondary expandability of the expanded beads and the rigidity of the molded article are improved, the average outer diameter D of the expanded beads is preferably 2 mm or more, more preferably 2.5 mm or more, and still more preferably 3 mm or more. On the other hand, from the viewpoint of improving the filling property into the mold during molding, the average outer diameter D of the expanded beads is preferably 8 mm or less, more preferably 6.5 mm or less, and still more preferably 5.5 mm or less.

In configuring a preferred range of the average outer diameter D of the expanded beads, the upper limit and the lower limit of the average outer diameter D of the expanded beads described above can be arbitrarily combined. For example, the preferred range of the average outer diameter D of the expanded beads may be 2 mm or more and 8 mm or less, 2.5 mm or more and 6.5 mm or less, or 3 mm or more and 5.5 mm or less.

The ratio [d/D] of the average hole diameter d to the average outer diameter D of the expanded beads is 0.4 or less. When the ratio [d/D] is too large, the open cell content of the molded article tends to increase to, for example, more than 20%. As a result, the appearance and rigidity of the molded article may decrease. From the viewpoint that the appearance of the molded article becomes more favorable, from the viewpoint that the rigidity is further improved, and from the viewpoint that the second expandability is further improved, the ratio [d/D] is preferably 0.35 or less, more preferably 0.3 or less, still more preferably 0.25 or less, and particularly preferably 0.2 or less. The ratio [d/D] is preferably 0.1 or more from the viewpoint that the value of the open cell content of the molded article can be more easily adjusted.

In configuring a preferred range of the ratio [d/D], the upper limit and the lower limit of the ratio [d/D] described above can be arbitrarily combined. For example, the preferred range of the ratio [d/D] may be 0.1 or more and 0.4 or less, 0.1 or more and 0.35 or less, 0.1 or more and less than 0.25, or 0.1 or more and 0.2 or less.

The average outer diameter D of the expanded beads is determined as follows. 50 or more expanded beads randomly selected from the expanded bead group are cut perpendicularly to the penetration direction of each of the through-holes at a position where the area of the cut surface is roughly maximum. A photograph of the cut surface of each expanded bead is taken, and the cross-sectional area of the expanded bead including the opening portion of the through-hole (that is, the area inside the contour of the expanded bead in the cross section) is determined. Then, a diameter of a virtual perfect circle having the same area as the cross-sectional area of the expanded bead is calculated, and this value is defined as the outer diameter of each expanded bead. An arithmetic average value of the outer diameters of the 50 or more expanded beads thus obtained is taken as the average outer diameter D of the expanded beads. It is noted that even in a case where the outer diameter of each of the expanded beads is not uniform in the penetration direction, the outer diameter of each expanded bead is determined by the outer diameter at the position where the area of the cut surface of the expanded bead is roughly maximum in the direction perpendicular to the penetration direction as described above.

The average wall thickness t of the tubular expanded beads is preferably 1.2 mm or more and 3 mm or less. In this case, the wall thicknesses of the expanded beads are sufficiently large, so that the secondary expandability during in-mold molding can be further improved. In addition, the expanded beads are more hardly crushed against an external force, and the rigidity of the molded article can be further improved. From such a viewpoint, the average wall thickness t of the expanded beads is more preferably 1.4 mm or more and 3 mm or less, and still more preferably 1.6 mm or more and 3 mm or less.

The average wall thickness t of the expanded beads is obtained by the following equation (1) using the average hole diameter d (unit: mm) of the through-holes and the average outer diameter D (unit: mm) of the expanded beads.

$$t = (D-d)/2 \dots (1)$$

A ratio t/D of the average wall thickness t to the average outer diameter D of the expanded beads is preferably 0.35 or more and 0.5 or less. When t/D falls within the above range, the filling property of the expanded beads is good and the secondary expandability is further improved in in-mold molding of the expanded beads. Thus, a molded article excellent in appearance and rigidity can be produced at a lower molding temperature.

From the viewpoint of a balance between a lightweight property and rigidity of the molded article, the apparent density of the expanded beads is preferably 10 kg/m$^3$ or more and 150 kg/m$^3$ or less, more preferably 15 kg/m$^3$ or more and 100 kg/m$^3$ or less, still more preferably 20 kg/m$^3$ or more and 80 kg/m$^3$ or less, and particularly preferably 25 kg/m$^3$ or more and 45 kg/m$^3$ or less. In the past, particularly in a case where a molded article having a small apparent density is produced, the molded article is likely to be significantly deformed after demolding, and it is difficult to shorten the time required for the aging step. On the other hand, in the production method of the present invention, even when the apparent density is small, the time required for the aging step can be shortened, and the productivity of the molded article can be enhanced.

A method for measuring the apparent density of the expanded beads is as follows. First, the expanded bead group is left to stand at a relative humidity of 50%, 23°C, and 1 atm for 1 day, and then the mass (unit: g) of the expanded bead group is measured. After the mass (unit: g) of the expanded bead group is measured, the expanded bead group is immersed in an alcohol (for example, ethanol) having a temperature of 23°C contained in a measuring cylinder with a wire mesh or the like, and a volume of the expanded bead group is determined from an increase in a liquid level. The mass of the expanded bead group thus obtained is divided by the volume of the expanded bead group, and the resulting value is subjected to unit conversion, so that the apparent density (unit: kg/m$^3$) of the expanded beads can be calculated.

From the viewpoint of further curtailing significant shrinkage and deformation of the molded article in a case of shortening the aging time and from the viewpoint of shortening the water cooling time during molding, a ratio of the apparent density of the expanded beads to a bulk density of the expanded beads (that is, apparent density/bulk density) is preferably 1.75 or more, more preferably 1.8 or more, and still more preferably 1.85. On the other hand, from the viewpoint of further enhancing the rigidity of the molded article and from the viewpoint of making the appearance better, the apparent density/bulk density is preferably 2.3 or less, more preferably 2.1 or less, and still more preferably 2.0 or less.

In configuring a preferred range of the apparent density/bulk density, the upper limit and the lower limit of the apparent density/bulk density described above can be arbitrarily combined. For example, the preferred range of the apparent density/bulk density may be 1.75 or more and 2.3 or less, 1.8 or more and 2.1 or less, or 1.85 or more and 2.0 or less.

The bulk density of the expanded beads is determined as follows. The expanded beads after the conditioning are filled in a measuring cylinder so as to be naturally deposited, and a bulk volume (unit: L) of the expanded bead group is read from the scale of the measuring cylinder. Then, a value obtained by dividing a mass (unit: g) of the expanded bead group in the measuring cylinder by the above-described bulk volume is subjected to unit conversion, thereby obtaining the bulk density (unit: kg/m$^3$) of the expanded beads.

The resin contained in the expanded beads is preferably non-crosslinked from the viewpoint of reducing the environmental load. The expanded beads composed of a non-crosslinked resin tend to cause a dimensional change of the molded article more easily as compared with the expanded beads made of a crosslinked resin. However, according to the production method, the dimensional change of the molded article can be curtailed even when the expanded beads composed of a non-crosslinked resin are used.

The term "non-crosslinked" as used in this specification means that an insoluble fraction in the expanded beads by a thermal xylene extraction method is 5 mass% or less. A proportion of the insoluble fraction in the expanded beads by the thermal xylene extraction method is preferably 3 mass% or less, and most preferably 0 mass%.

A method for measuring the xylene-insoluble fraction in the expanded beads by the thermal xylene extraction method is as follows. First, about 1 g of expanded beads are precisely weighed, and then placed in a 150-mL round-bottom flask. Next, 100 mL of xylene is added to the flask, and the contents of the flask are refluxed for 6 hours by heating with a mantle heater. Thereafter, the undissolved residue is quickly filtered with a 100-mesh wire net to be separated, and dried in a vacuum dryer at 80°C for 8 hours or longer. Using a mass M (unit: g) of the dried product obtained as described above and a mass L (unit: g) of the expanded beads before reflux, the xylene-insoluble fraction (unit: mass%) can be calculated on the basis of the following equation (6).

$$\text{Insoluble fraction by thermal xylene extraction method} = (M/L) \times 100 \ldots (6)$$

(Method for producing expanded beads)

The expanded beads can be produced, for example, by a method in which polyethylene-based resin particles containing a blowing agent and dispersed in a dispersion medium are released together with the dispersion medium under a low pressure (that is, a dispersion medium release expanding method). Specifically, it is preferable that the resin particles are dispersed in a dispersion medium in a sealed container, and after heating, a blowing agent is supplied into the sealed container to impregnate the resin particles with the blowing agent. Thereafter, it is preferable that, after a holding step of growing the secondary crystal at a constant temperature, the contents in the sealed container are released to an atmosphere under a pressure lower than the pressure in the sealed container to foam(expand) the resin particles containing the blowing agent to obtain expanded beads. In a case where a cover layer is formed, resin particles having a multilayer structure including a core layer and a cover layer covering the core layer are foamed to obtain expanded beads having a multilayer structure including a foamed layer and a cover layer covering the foamed layer.

The resin particles are produced, for example, as follows. First, a polyethylene-based resin serving as a base resin, and an additive supplied as necessary are supplied into an extruder, and heated and kneaded to obtain a resin melt-kneaded product. Thereafter, the resin melt-kneaded product is extruded into a tubular strand having a through-hole from a small hole of a die attached to the tip of the extruder, cooled, and cut to obtain resin particles. The extrudate is cut, for example, with a pelletizer. The cutting method can be selected from a strand cutting method, a hot cutting method, an underwater cutting method, and the like. In this manner, tubular resin particles each having a through-hole can be obtained.

Examples of the additive to be added to the core layer of the resin particle include a cell controlling agent, a crystal nucleating agent, a colorant, a flame retardant, a flame retardant aid, a plasticizer, an antistatic agent, an antioxidant, an ultraviolet inhibitor, a light stabilizer, a conductive filler, and an antibacterial agent. Examples of the cell controlling agent include: inorganic powders such as talc, mica, zinc borate, calcium carbonate, silica, titanium oxide, gypsum, zeolite, borax, aluminum hydroxide, and carbon; and organic powders such as a phosphoric acid-based nucleating agent, a phenolic nucleating agent, an amine-based nucleating agent, and a polyfluoroethylene-based resin powder. In the case where the cell controlling agent is added, the content of the cell controlling agent is preferably 0.01 parts by mass or more and 1 part by mass or less with respect to 100 parts by mass of the polyethylene-based resin.

In the case of forming the cover layer, first, a resin melt-kneaded product of each raw material is obtained using an extruder for forming a core layer and an extruder for forming a cover layer. Next, the melt-kneaded products are extruded and joined in the die to form a composite of a sheath-core type including a tubular core layer in a non-foamed state and a cover layer in a non-foamed state covering an outer surface of the tubular core layer. The composite is cooled while being extruded into a strand shape from a small hole of a spinneret attached to the tip of the extruder, and cut, whereby multilayer resin particles can be obtained.

A particle size of the resin particle is preferably 0.1 mm or more and 3.0 mm or less, and more preferably 0.3 mm or more and 1.5 mm or less. A ratio of length/outer diameter of the resin particle is preferably 0.5 or more and 5.0 or less, and more preferably 1.0 or more and 3.0 or less. An average mass per one resin particle (obtained from randomly selected 200 particles) is preferably 0.1 mg or more and 20 mg or less, more preferably 0.3 mg or more and 10 mg or less, still more preferably 0.5 mg or more and 5 mg or less, and particularly preferably 1 mg or more and 3 mg or less. A mass ratio between the core layer and the cover layer in the case of the multilayer resin particle is preferably core layer : cover layer = 99.5 : 0.5 to 80 : 20, more preferably 99 : 1 to 85 : 15, and still more preferably 97 : 3 to 90 : 10.

The average hole diameter d of the through-holes in the expanded beads can be adjusted within the above desired range by adjusting the hole diameter dr of the through-hole in the resin particle. The hole diameter dr of the through-hole of the core layer of the resin particle can be adjusted by, for example, a hole diameter of a small hole of a die for forming the through-hole (that is, an inner diameter of the die). In addition, by adjusting the particle size and the average mass of the resin particles, the average outer diameter and the average wall thickness of the expanded beads can be adjusted within the above desired ranges.

From the viewpoint of more reliably producing expanded beads in which the average hole diameter d of the through-holes is less than 1 mm and the ratio [d/D] of the average hole diameter d to the average outer diameter D is 0.4 or less, the average hole diameter dr of the through-holes of the resin particles is preferably less than 0.25 mm. From the viewpoint of the production stability of resin particles each having a through-hole, the average hole diameter dr of the through-holes of the resin particles is preferably 0.1 mm or more.

Furthermore, from the same viewpoint, a ratio dr/Dr of the average hole diameter dr to the average outer diameter Dr of resin particles is preferably 0.4 or less, more preferably 0.3 or less, still more preferably 0.25 or less, and particularly preferably 0.2 or less. From the viewpoint of the production stability of the resin particles each having a through-hole, the ratio dr/Dr of the average hole diameter dr to the average outer diameter Dr of the resin particles is preferably 0.1 or more.

The average hole diameter dr of the through-holes of the resin particles is determined as follows. 50 or more resin particles randomly selected from the resin particles are cut perpendicularly to the penetration direction of each of the through-holes at a position where the area of the cut surface is roughly maximum. A photograph of the cut surface of each resin particle is taken, and the cross-sectional area of the through-hole portion (that is, the opening area of the through-hole in the cross section) is obtained. Then, a diameter of a virtual perfect circle having the same area as the cross-sectional area of the through-hole portion is calculated, and this value is defined as the hole diameter of each through-hole. An arithmetic average value of the hole diameters of the through-holes of 50 or more resin particles thus obtained is taken as the average hole diameter dr of the through-holes of the resin particles. It is noted that even in a case where the hole diameter of the through-hole of each of the resin particles is not uniform in the penetration direction, the hole diameter of the through-hole of each of the resin particles is determined by the hole diameter at the position where the area of the cut surface of the resin particle is roughly maximum as described above.

The average outer diameter Dr of the resin particles is determined as follows. 50 or more resin particles randomly selected from the resin particles are cut perpendicularly to the penetration direction of each of the through-holes at a position where the area of the cut surface is roughly maximum. A photograph of the cut surface of each resin particle is taken, and the cross-sectional area of the resin particle including the opening portion of the through-hole (that is, the area inside the contour of the resin particle in the cross section) is obtained. Then, a diameter of a virtual perfect circle having the same area as the cross-sectional area of the resin particle is calculated, and this value is defined as the outer diameter of each resin particle. An arithmetic average value of the outer diameters of the 50 or more resin particles thus obtained is taken as the average outer diameter Dr of the resin particles. It is noted that even in a case where the outer diameter of each of the resin particles is not uniform in the penetration direction, the outer diameter of each resin particle is determined by the outer diameter at the position where the area of the cut surface of the resin particle is roughly maximum in the direction perpendicular to the penetration direction as described above.

It is noted that in the strand cutting method, the particle size, length/outer diameter ratio, and average mass of the resin particles can be prepared by appropriately changing the extrusion speed, take-up speed, cutter speed, and the like when the resin melt-kneaded product is extruded.

As a dispersion medium for dispersing the resin particles obtained as described above in a sealed container, a liquid aqueous dispersion medium is used. The aqueous dispersion medium is a dispersion medium containing water as a main component. A proportion of water in the aqueous dispersion medium is preferably 60 mass% or more, more preferably 70 mass% or more, and still more preferably 80 mass% or more. Examples of the aqueous dispersion medium other than water include ethylene glycol, glycerin, methanol, and ethanol.

In the dispersion medium release expanding method, it is preferable to add a dispersant to the dispersion medium so that the resin particles heated in the container are not fusion-bonded to each other. The dispersant may be any substance preventing the resin particles from fusion-bonding in the container, and can be used regardless of whether the dispersant is organic or inorganic. From the viewpoint of easy handling, a fine particulate inorganic substance is preferable. Examples of the dispersant include clay minerals such as amsnite, kaolin, mica, and clay. The clay mineral may be natural or synthetic. Examples of the dispersant include aluminum oxide, titanium oxide, basic magnesium carbonate, basic zinc carbonate, calcium carbonate, and iron oxide. These dispersants may be used alone, or two or more kinds of dispersants may be used in combination. Among them, a clay mineral is preferably used as the dispersant. An addition amount of the dispersant is preferably 0.001 parts by mass or more and 5 parts by mass or less per 100 parts by mass of the resin particles.

It is noted that in the case where the dispersant is used, an anionic surfactant such as sodium dodecylbenzenesulfonate, sodium alkylbenzenesulfonate, sodium lauryl sulfate, or sodium oleate is preferably used in combination as a dispersion aid. An addition amount of the dispersion aid is preferably 0.001 parts by mass or more and 1 part by mass or less per 100 parts by mass of the resin particles.

As the blowing agent for foaming(expanding) the resin particles, a physical blowing agent is preferably used. Examples of the physical blowing agent include an inorganic physical blowing agent and an organic physical blowing agent. Examples of the inorganic physical blowing agent include carbon dioxide, air, nitrogen, helium, and argon. Examples of the organic physical blowing agent include aliphatic hydrocarbons such as propane, butane, and hexane, cyclic aliphatic hydrocarbons such as cyclopentane and cyclohexane, and halogenated hydrocarbons such as chlorofluoromethane, trifluoromethane, 1,1-difluoromethane, 1-chloro-1,1-dichloroethane, 1,2,2,2-tetrafluoroethane, methyl chloride, ethyl chloride, and methylene chloride. The physical blowing agent may be used singly or in combination of two or more kinds thereof. In addition, the inorganic physical blowing agent and the organic physical blowing agent may be mixed and used. From the viewpoint of environmental load and handleability, the inorganic physical blowing agent is preferably used, and carbon dioxide is more preferably used. When the organic physical blowing agent is used, it is preferable to use n-butane, i-butane, n-pentane, or i-pentane from the viewpoint of solubility in the polyethylene-based resin and foamability.

An addition amount of the blowing agent with respect to 100 parts by mass of the resin particles is preferably 0.1 parts by mass or more and 30 parts by mass or less, and more preferably 0.5 parts by mass or more and 15 parts by mass or less.

As a method for impregnating the resin particles with the blowing agent in the process of producing expanded beads, a method is preferably used in which resin particles are dispersed in an aqueous dispersion medium in a sealed container and a blowing agent is supplied to the sealed container while heating to impregnate the resin particles with the blowing agent.

A pressure in the sealed container during expanding is preferably 0.5 MPa (G) or more in terms of gauge pressure. On the other hand, the pressure in the sealed container is preferably 4.0 MPa (G) or less. Within the above range, expanded beads can be produced safely without the risk of breakage, explosion, or the like of the sealed container.

In the process of producing expanded beads, by raising the temperature of the aqueous dispersion medium so that the temperature raising rate is 1°C/min or more and 5°C/min or less, the temperature at the time of expanding can also be within an appropriate range.

The expanded bead having a crystal structure in which a melting peak (a resin intrinsic peak) inherent to the resin and one or more melting peaks (a high-temperature peak) on a high temperature side of the resin intrinsic peak appear in a DSC curve obtained by differential scanning calorimetry (DSC) is obtained as follows, for example.

During heating in the production process of the expanded beads, a first holding step of holding at a temperature of (the melting point of the polyethylene-based resin constituting the core layer - 30°C) or higher and lower than (the melting end temperature of the polyethylene-based resin) for a sufficient time, preferably about 10 to 60 minutes is performed. Thereafter, the temperature is adjusted to a temperature from (the melting point of the polyethylene-based resin - 15°C) to (the melting end temperature of the polyethylene-based resin + 10°C). Then, if necessary, a second holding step of holding at that temperature for a more sufficient time, preferably about 10 to 60 minutes is performed. Next, by releasing expandable resin particles containing the blowing agent from the inside of the sealed container to an atmosphere under a lower pressure to foam the expandable resin particles, expanded beads having the above-described crystal structure can be obtained. The foaming is preferably performed in the sealed container at (the melting point of the polyethylene-based resin constituting the core layer - 15°C) or higher, and more preferably performed at (the melting point of the polyethylene-based resin) or higher and (the melting point of the polyethylene-based resin + 10°C) or lower.

In addition, particularly in the case of producing expanded beads having a low apparent density, the second expanding step can be performed on the expanded beads obtained by the dispersion medium release expanding method described above. In the second expanding step, expanded beads are put into a sealed container capable of pressurizing, and a pressurization treatment for pressurizing the inside of the sealed container with a pressurized gas such as air is performed to increase the internal pressure of the expanded beads. Thereafter, the expanded beads are heated in a container for a predetermined time using a heating medium such as steam to perform the second expanding, whereby the apparent density of the expanded beads can be further lowered.

(Molded article)

A molded article can be obtained by in-mold molding of the expanded beads (that is, the in-mold molding method). The in-mold molding method is performed by filling expanded beads into a mold and heat-molding the expanded beads using a heating medium such as steam. Specifically, after expanded beads are filled in a mold, a heating medium such as steam is introduced into the mold, whereby the expanded beads are heated to be secondarily expanded, and are mutually fusion-bonded to obtain a molded article to which the shape of the molding space is imparted.

The molded article is formed by, for example, in-mold molding of expanded beads, and is composed of a large number of expanded beads fusion-bonded to each other. The molded article has an open cell structure. The open cell structure is a minute space portion communicating with the outside of the molded article. The open cell structure is formed by complicatedly connecting voids formed by allowing through-holes of a plurality of expanded beads to communicate with each other, voids formed by allowing the through-holes of the expanded beads to communicate with voids between the expanded beads, voids formed by allowing voids between the expanded beads to communicate with each other, open cell portions of the expanded beads constituting the molded article, and the like.

The open cell content of the molded article is preferably 8% or more and 20% or less. In a case where the open cell content of the molded article is less than 8%, when the aging time is shortened, the molded article may be significantly shrunk and deformed. On the other hand, when the open cell content of the molded article exceeds 20%, the appearance and rigidity of the molded article may be deteriorated. From the viewpoint that dimensional change of the molded article is more reliably curtailed when the aging time is shortened, the open cell content of the molded article is preferably 9% or more, more preferably 10% or more, still more preferably 12% or more, and particularly preferably more than 12%. From the viewpoint that the appearance and rigidity of the molded article can be further improved, the open cell content of the molded article is preferably 18% or less, more preferably 15% or less, and still more preferably less than 15%.

In configuring a preferred range of the open cell content of the molded article, the upper limit and the lower limit of the open cell content described above can be arbitrarily combined. For example, the open cell content of the molded article may be 9% or more and 18% or less, 10% or more and 15% or less, 12% or more and less than 15%, or more than 12% and less than 15%.

The molded article has a closed cell content of 80% or more. When the closed cell content of the molded article is less than 80%, the appearance and rigidity of the molded article may be deteriorated. From the viewpoint of further improving the appearance and rigidity of the molded article, the closed cell content of the molded article is preferably 82% or more, and more preferably 85% or more.

The closed cell content of the molded article is measured in accordance with ASTM 6226-10. The method for measuring the closed cell content of the molded article is specifically as described below. First, the molded article is conditioned by allowing the molded article to stand in an atmosphere at a temperature of 23°C for 12 hours. Next, a measurement sample of 2.5 cm long × 2.5 cm wide × 2.5 cm high is cut out from a central portion of the molded article, and its geometric volume Va (unit: $cm^3$) is measured. Specifically, Va is a product of a longitudinal dimension (unit: cm), a lateral dimension (unit: cm), and a height dimension (unit: cm) of the measurement sample.

Next, a true volume Vx of the measurement sample is measured by an air-comparison pycnometer (specifically, "AccuPyc II 1340" manufactured by Shimadzu Corporation) in accordance with the procedure described in ASTM-D 6226-10. At the time, the pressure applied in the purging step and the testing step is set to 5 kPa. In addition, in procedures 9.13 and 9.14, the pressure is recorded after waiting until the change rate of pressure becomes 0.100 kPa/min or less.

Using the geometric volume Va and the true volume Vx of the measurement sample obtained as described above, the closed cell content (unit: %) of the measurement sample is calculated based on the following equation (7).

$$\text{Closed cell content} = (Vx - W/\rho) \times 100/(Va - W/\rho)... (7)$$

It is noted that the meanings of the symbols in the above equation (7) are as follows.

Vx: True volume of the measurement sample measured by the method described above, that is, the sum of the volume of the resin constituting the molded article and the total cell volume of the closed cell portion in the molded article (unit: $cm^3$)
Va: Geometric volume of measurement sample (unit: $cm^3$)
W: Mass of the measurement sample (unit: g)
$\rho$: Density of resin constituting the molded article (unit: $g/cm^3$)

The above operation is performed for each of five measurement samples cut out from the molded article, and a value obtained by arithmetically averaging the closed cell contents of the five measurement samples is taken as a closed cell content Bp of the molded article.

A density of the molded article is preferably 10 $kg/m^3$ or more and 100 $kg/m^3$ or less. In this case, the lightweight property and the rigidity of the molded article can be improved in a well-balanced manner. From the viewpoint of further improving the rigidity of the molded article, the density of the molded article is more preferably 15 $kg/m^3$ or more, and still more preferably 20 $kg/m^3$ or more. From the viewpoint of further improving the lightweight property of the molded article, the density of the molded article is more preferably 80 $kg/m^3$ or less, still more preferably 50 $kg/m^3$ or less, and particularly preferably 35 $kg/m^3$ or less. The density of the molded article is calculated by dividing the mass (unit: g) of the molded article by the volume (unit: L) obtained from the outer dimension of the molded article and performing unit conversion. It is noted that, for example, in a case where the molded article has a complicated shape at least partially, and it is not easy to determine the volume from the outer dimension of the molded article, the volume of the molded article can be determined by three-dimensional measurement.

Conventionally, in a case where a molded article having a small density is produced, the molded article is likely to be significantly deformed after demolding, and it is thus particularly difficult to shorten the aging time. In contrast, according to the expanded beads molded article of the present invention, the aging time can be shortened even when the apparent density is small, and a molded article having a desired shape and being excellent in appearance and rigidity is obtained even in short-time aging. From the viewpoint of effectively exhibiting this effect, the density of the molded article is preferably set within the above range.

In configuring a preferred range of the density of the molded article, the upper limit and the lower limit of the density of the molded article described above can be arbitrarily combined. For example, the preferred range of the density of the molded article may be 15 kg/m³ or more and 80 kg/m³ or less, or may be 20 kg/m³ or more and 50 kg/m³ or less.

The molded article is also used as a sound absorbing material, an impact absorbing material, a cushioning material, and the like in various fields such as a vehicle field including an automobile and a building field.

EXAMPLES

Next, examples of the polyethylene-based resin expanded beads molded article and the method for producing the same according to the present invention will be described.

(Polyethylene-based resin)

Table 1 shows properties and the like of the polyethylene-based resins used for producing the expanded beads. The polyethylene-based resins used in the present examples each are a linear low-density polyethylene (PE-LLD).

[Table 1]

(Table 1)

|  | Unit | PE1 | PE2 | PE3 |
|---|---|---|---|---|
| Type of polyethylene-based resin | - | PE-LLD | PE-LLD | PE-LLD |
| Melting point | °C | 121 | 112 | 120 |
| MFR | g/10 min | 1.1 | 10 | 20 |
| Density | kg/m³ | 926 | 910 | 919 |
| Flexural modulus | MPa | 248 | 150 | 180 |

[Flexural modulus of polyethylene-based resin]

The polyethylene-based resin was heat-pressed at 200°C to prepare a 4 mm-thick sheet, and a test piece having a length of 80 mm × a width of 10 mm × a thickness of 4 mm was cut out from the sheet. The flexural modulus of this test piece was determined in accordance with JIS K 7171:2008. It is noted that a radius R1 of an indenter and a radius R2 of a support base are both 5 mm, an inter-fulcrum distance is 64 mm, and a test speed is 2 mm/min.

[Melting point of polyethylene-based resin]

The melting point of the polyethylene-based resin was determined based on JIS K7121:1987 by preparing a test piece made of the polyethylene-based resin. Specifically, first, the test piece was heated from 30°C to 200°C at a heating rate of 10°C/min, and then cooled to 30°C at a cooling rate of 10°C/min to condition the test piece. The conditioned test piece was heated from 30°C to 200°C at a heating rate of 10°C/min to obtain a DSC curve, and a vertex temperature of the melting peak appearing in the DSC curve is taken as the melting point of the polyethylene-based resin. It is noted that as the measuring apparatus, a heat flux differential scanning calorimeter (manufactured by SII NanoTechnology Inc., model number: DSC 7020) was used.

[Melt mass flow rate of polyethylene-based resin]

The melt mass flow rate (that is, MFR) of the polyethylene-based resin was measured under conditions of a test temperature of 190°C and a load of 2.16 kg in accordance with JIS K 7210-1:2014.

Next, the configuration and production method of the expanded beads used in the present examples will be described.

(Expanded beads A)

The expanded beads A each have a tubular shape with a through-hole. As shown in Table 2, the expanded beads A each have a multilayer structure including a foamed layer made of PE1 as a polyethylene-based resin and a cover layer which is made of PE2 as a polyethylene-based resin and covers the foamed layer. In preparing the expanded beads A, a coextrusion apparatus including an extruder for forming a core layer, an extruder for forming a cover layer, and a coextrusion die connected to these two extruders was used, and an extrudate extruded from the coextrusion apparatus was cut by a strand cutting method to prepare multilayer resin particles. The specific production method of the expanded beads A is as follows.

[Production of resin particles]

First, as shown in Table 2, PE1 constituting the core layer and the cell controlling agent were supplied to the extruder for forming a core layer set to a maximum set temperature of 245°C, and melt-kneaded in the extruder to obtain a resin melt-kneaded product for forming the core layer. Specifically, zinc borate was used as the cell controlling agent. The blending amount of zinc borate was 500 ppm by mass with respect to the mass of the polyethylene-based resin.

In parallel with this, PE2 constituting the cover layer and the polymeric antistatic agent were supplied to the extruder for forming a cover layer set to a maximum set temperature of 245°C, and melt-kneaded in the extruder to obtain a resin melt-kneaded product for forming the cover layer. As the polymeric antistatic agent, a polyether-polyolefin block copolymer ("PELESTAT (registered trademark) 230" manufactured by Sanyo Chemical Industries, Ltd., melting point: 163°C) was used. The blending amount of the polymeric antistatic agent in the resin melt-kneaded product for forming the cover layer was set to the value shown in Table 2.

These resin melt-kneaded products were co-extruded and joined in the die to form a composite including a core layer in a non-foamed state and a cover layer in a non-foamed state covering a side peripheral surface of the core layer, the composite including a through-hole formed near the central portion of the core layer along the extrusion direction. After this composite was extruded from the die, the extrudate was cooled in water while being taken up, and cut to an appropriate length with a pelletizer to obtain multilayer resin particles including a core layer having circular tube shape with a through-hole and a cover layer covering the core layer. The water temperature at the time of cooling was 23°C. The mass per one multilayer resin particle was about 2.5 mg.

[Foaming]

Next, the multilayer resin particles were foamed by a dispersion medium release expanding method to obtain expanded beads A. Specifically, first, 1 kg of the multilayer resin particles were put in a 5-L sealed container together with 3 L of water as a dispersion medium, and further 0.3 parts by mass of kaolin as a dispersant and 0.004 parts by mass of a surfactant were added with respect to 100 parts by mass of the multilayer resin particles in the sealed container. The surfactant used in the present examples is specifically sodium alkylbenzene sulfonate.

After carbon dioxide as a blowing agent was further added into the sealed container, the sealed container was sealed, and the inside of the sealed container was heated to a foaming temperature shown in Table 2 while being stirred. The pressure in the container (also referred to as impregnation pressure or carbon dioxide pressure) at this time was a value shown in Table 2. After the temperature in the sealed container reached the foaming temperature, this temperature was maintained for 15 minutes. Thereafter, the contents in the container were released under atmospheric pressure to foam(expand) the core layer of the multilayer resin particles, thereby obtaining expanded beads A. In the present example, the expanded beads A released from the container were dried at 23°C for 24 hours, and then the production of a molded article described below and the evaluation of physical properties thereof were performed.

(Expanded beads B)

The expanded beads B have substantially the same configuration as the expanded beads A, except that the polyethylene-based resin constituting the cover layer is changed to PE3. The method for producing the expanded beads B is the same as the method for producing the expanded beads A, except that the polyethylene-based resin supplied to the extruder for forming a cover layer was changed to PE3 and the foaming temperature was changed to the value shown in Table 2.

(Expanded beads C)

The expanded beads C have substantially the same configuration as the expanded beads A, except that the apparent density is a value shown in Table 2. In producing the expanded beads C, a method of expanding the multilayer resin particles in two stages was adopted. Specifically, first, multilayer resin particles were expanded in the same manner as in the method for producing expanded beads A, except that the foaming temperature and the pressure in the container were changed to the values shown in Table 2 to obtain first-step expanded beads. Next, the first-step expanded beads were placed in a pressure-resistant container, the inside of the pressure-resistant container was pressurized with air, and the air was impregnated into the cells of the first-step expanded beads to increase the internal pressure of the cells. The pressure (that is, the internal pressure) in the cells in the first-step expanded beads taken out from the pressure-resistant container was 0.5 MPa (G).

Thereafter, the first-step expanded beads taken out from the pressure-resistant container were placed in a metal drum, and steam was supplied so that the drum pressure was 0.03 MPa (G) to heat the first-step expanded beads. As described above, the apparent density of the first-step expanded beads was reduced to obtain expanded beads (also referred to as second-step expanded beads).

(Expanded beads D)

The expanded beads D have substantially the same configuration as the expanded beads A, except that the expanded beads D have no through-hole and the cover layer does not contain a polymeric antistatic agent. The method for producing the expanded beads D is the same as the method for producing the expanded beads A, except that the polymeric antistatic agent was not supplied to the extruder for forming a cover layer, the shape of the die for use in producing multilayer resin particles was changed to produce multilayer resin particles having no through-hole, and the foaming temperature and the pressure in the container were changed to the values shown in Table 2.

(Expanded beads E)

The expanded beads E have substantially the same configuration as the expanded beads C, except that the expanded beads E have no through-hole and the cover layer does not contain a polymeric antistatic agent. The method for producing the expanded beads E is the same as the method for producing the expanded beads C, except that the polymeric antistatic agent was not supplied to the extruder for forming a cover layer, the shape of the die for use in producing multilayer resin particles was changed to produce multilayer resin particles having no through-hole, and the foaming temperature and the pressure in the container were changed to the values shown in Table 2.

(Expanded beads F)

The expanded beads F have substantially the same configuration as the expanded beads A, except that the expanded beads F do not have a cover layer. The method for producing the expanded beads A is the same as the method for producing the expanded beads A, except that the extruder for forming a cover layer was not used to produce resin particles having a single layer structure and the foaming temperature was changed to the value shown in Table 2. The expanded beads F do not contain a polymeric antistatic agent.

(Expanded beads G)

The expanded beads G have substantially the same configuration as the expanded beads F, except that the average hole diameter d of the through-holes is large. The method for producing the expanded beads G is the same as the method for producing the expanded beads F, except that the shape of the die for use in producing the resin particles was changed to produce the resin particles each having a through-hole with a large hole diameter, and the foaming temperature and the pressure in the container were changed to the values shown in Table 2.

(Examples 1 to 2, 6, Comparative Examples 1, 5)

In these Examples and Comparative Examples, expanded beads shown in Table 3 and Table 4 were used to produce a molded article of 300 mm long × 250 mm wide × 60 mm thick. Specifically, first, expanded beads not subjected to the pretreatment pressurization step were filled into a flat plate mold of 300 mm long × 250 mm wide × 60 mm thick by a cracking filling method. A cracking amount (specifically, a ratio of a die opening amount of the mold to an inner dimension in the thickness direction) at the time of filling was set to 20% (that is, 12 mm), and after the filling was completed, the mold was clamped in the thickness direction to mechanically compress the expanded beads.

Next, steam was supplied into the mold to perform in-mold molding. In the in-mold molding, first, steam was supplied into the mold for 5 seconds in a state where a drain valve of the mold was opened to perform preheating. Subsequently, the drain valve was closed, and steam was supplied from one surface side of the mold until a pressure reached a pressure that is lower than the molding pressure during main heating shown in Table 3 and Table 4 by 0.08 MPa (G) to perform one-side heating. Next, steam was supplied from the other surface side of the mold until a pressure reached a pressure that is lower than the molding pressure during main heating by 0.04 MPa(G) to perform one-side heating. Thereafter, steam was supplied from both surfaces of the mold until the pressure reached the molding pressure for the main heating to perform main heating. After completion of the main heating, the pressure in the mold was released, and the molded article was cooled in the mold until the surface pressure due to the expanding force of the molded article reached 0.04 MPa (G). After the cooling of the molded article was completed, the molded article was taken out from the mold, and an aging step was performed under conditions corresponding to the contents of the evaluation described below.

It is noted that each molding pressure during main heating in Examples 1 to 6 is a value of the lowest molding pressure among the molding pressures which can produce a molded article that will pass the after-mentioned evaluation of fusion bondability. In "Water cooling time" in Table 3 and Table 4, the time from the time point at the completion of the main heating to the time point at which the surface pressure reached 0.04 MPa (G) is described.

(Examples 3 to 5, Comparative Examples 2 to 4)

In these Examples and Comparative Examples, the expanded beads shown in Table 3 and Table 4 were subjected to a pretreatment pressurization step, and then subjected to in-mold molding by the same method as in Example 1 to obtain a molded article. In the pretreatment pressurization step, specifically, the expanded beads were placed in a pressure-resistant container, the inside of the pressure-resistant container was pressurized with air, and the air was impregnated into the cells of the first-step expanded beads to increase the internal pressure of the cells. The pressure (that is, the internal pressure) in the cells in the expanded beads taken out from the pressure-resistant container were as shown in Table 3 and Table 4.

The above-mentioned expanded beads and molded articles were subjected to physical property measurement and evaluation shown in Table 2 to Table 4. The evaluation methods of the evaluation items shown in Table 2 to Table 4 will be described below. It is noted that measurement and evaluation of physical properties of expanded beads were performed after allowing the expanded beads to stand for 24 hours under conditions of a relative humidity of 50%, 23°C, and 1 atm to be conditioned. In addition, the measurement and evaluation of the physical properties of the molded article were performed using a molded article subjected to an aging step with the shortest aging time among the aging times evaluated as having good dimensional stability in the "Evaluation of dimensional stability when adopting short-time aging" described below. Conditions of the atmosphere in the aging step were a relative humidity of 50%, a temperature of 60°C, and a pressure of 1 atm.

(Average hole diameter d of through-holes of expanded beads)

100 expanded beads randomly selected from the expanded bead group after conditioning were cut perpendicularly to the penetration direction of each of the through-holes at a position where the area of the cut surface was roughly maximum. A photograph of the cut surface of each expanded bead was taken, and the cross-sectional area (opening area) of the through-hole portion in the cross-sectional photograph was obtained. A diameter of a virtual perfect circle having the same area as the cross-sectional area of the through-hole portion was calculated, and this value was defined as the hole diameter of the through-hole of each expanded bead. An arithmetic average value of the hole diameters of the through-holes of 100 expanded beads was taken as the average hole diameter d of the through-holes of the expanded beads.

(Average outer diameter D of expanded beads)

100 expanded beads randomly selected from the expanded bead group after conditioning were cut perpendicularly to the penetration direction of each of the through-holes at a position where the area of the cut surface was roughly maximum. A photograph of the cut surface of each expanded bead was taken, and the cross-sectional area of the expanded bead including the opening area of the through-hole was obtained. A diameter of a virtual perfect circle having the same area as the cross-sectional area of the expanded bead was calculated, and this value is defined as the outer diameter of each expanded bead. An arithmetic average value of the outer diameters of the 100 expanded beads was taken as the average outer diameter D of the expanded beads.

(Average wall thickness t of expanded beads)

The average wall thickness of the expanded beads was calculated based on the following equation (1) using the average outer diameter D of the expanded beads and the average hole diameter d of the through-holes described above.

$$t = (D-d)/2 \ldots (1)$$

(Bulk density of expanded beads)

The expanded beads after the conditioning were put in a measuring cylinder so as to be naturally deposited, and a bulk volume (unit: L) of the expanded bead group was read from the scale of the measuring cylinder. In the present examples, the bulk volume of the expanded beads in the measuring cylinder was 1 L. Then, a value obtained by dividing a mass (unit: g) of the expanded bead group in the measuring cylinder by the above-described bulk volume was subjected to unit conversion to calculate the bulk density (unit: $kg/m^3$) of the expanded beads.

(Apparent density of expanded beads)

The mass of the expanded bead group after the conditioning was measured, and then the expanded bead group was immersed in ethanol at a temperature having a temperature of 23°C contained in a measuring cylinder with a wire mesh. Then, in consideration of the volume of the wire mesh, the volume of the expanded bead group read from the water level rise was measured. The apparent density (unit: $kg/m^3$) of the expanded beads was calculated by dividing the mass (unit: g) of the expanded bead group thus obtained by the volume (unit: L) and then performing unit conversion.

(Closed cell content of expanded beads)

The method for measuring the closed cell content of the expanded beads is as described above. As the measurement sample, expanded beads after the conditioning were used. The bulk volume of the expanded beads used for the measurement was about 20 $cm^3$, and as the density of the resin constituting the expanded beads, the density (unit: $g/cm^3$) of the polyethylene-based resin constituting the foamed layer was used.

(Heat of fusion of high-temperature peak of expanded bead)

One expanded bead is collected from the expanded beads after the conditioning. Using this expanded bead as a test piece, the heat of fusion at a high-temperature peak of each expanded bead was measured by the method described above. As the measuring apparatus, "DSC.Q1000" manufactured by TA Instruments was used. The above operation was performed on five expanded beads, and the arithmetic average value of the heat of fusion at the high-temperature peak in the five expanded beads was shown in Table 2.

(Internal pressure of expanded bead after pretreatment pressurization step)

A mass Q (unit: g) of the expanded beads in a state where the internal pressure was increased immediately before being filled into the mold and a mass U (unit: g) of the expanded beads after a lapse of 48 hours from the pretreatment pressurization step were measured. Using these values, an internal pressure P (unit: MPa (G)) of cells of the expanded beads after the pretreatment pressurization step was calculated based on the following equation (8).

$$P = \{(Q-U)\div M\}\times R\times T\div V... (8)$$

It is noted that M in the equation (8) is a molecular weight of air, R is a gas constant, T is an absolute temperature (unit: K) of the expanded beads, and V is a volume (unit: L) obtained by subtracting a volume of the resin in the expanded beads from an apparent volume of the expanded beads. In the present examples, M = 28.8 g/mol, R = 0.0083 MPa·L/(K·mol), and T = 296 K were used. In Examples and Comparative Examples in which the pretreatment pressurization step was not performed, "Absence" was written in the column of "Presence or absence of pretreatment pressurization step" and a symbol "-" was described in the column of "Internal pressure after pretreatment pressurization step" in Table 3 and Table 4. When the pretreatment pressurization step is not performed, the internal pressure of the expanded beads filled in the mold is 0 MPa (G) (that is, the internal pressure is equal to the atmospheric pressure.).

(Open cell content of molded article)

The open cell content of the molded article was measured in accordance with ASTM6226-10, with a correction of the influence of closed cells broken at the time of cutting out the measurement sample in accordance with Procedure 2 described in Supplement X1.3 of the same standard. The specific method for measuring the open cell content of the molded article is as described above.

(Closed cell content of molded article)

The closed cell content of the molded article was measured in accordance with ASTM 6226-10. The specific method for measuring the closed cell content of the molded article is as described above. The method for measuring the closed cell content of the molded article is as described above. It is noted that as the density (unit: $g/cm^3$) of the resin constituting the molded article, the density of the polyethylene-based resin constituting the foamed layer in the expanded bead for producing the molded article was used.

(Density of molded article)

The density (unit: $kg/m^3$) of the molded article was calculated by dividing the mass (unit: g) of the molded article by the volume (unit: L) obtained from the outer dimension of the molded article and then performing unit conversion

(Evaluation of dimensional stability when employing short-time aging)

The dimensional stability when employing short-time aging was evaluated by changing the aging time (that is, the time for allowing the molded article to stand still) and evaluating the recoverability of the molded article after elapse of each aging time in the aging step of demolding the molded article from the mold and then allowing the molded article to stand for a predetermined time under a high-temperature atmosphere adjusted to a temperature of 60°C. Specifically, a molded article was produced by the method described above, and taken out from the mold, and then the aging step was performed by adopting any one of aging times of 2 hours, 3 hours, 8 hours, and 12 hours. Then, recoverability was evaluated using these molded articles as described below. In the case where a molded article having an evaluation result of acceptable was obtained, it was judged that the dimensional stability was good at the aging time.

In the "Evaluation of dimensional stability when employing short-time aging" columns of Table 3 and Table 4, the symbol "A+" is listed in the case where the shortest aging time required for a molded article to have a good dimensional stability is 2 hours, the symbol "A" is listed in the case where the shortest aging time is 3 hours, the symbol "B" is listed in the case where the shortest aging time is 8 hours, and the symbol "C" is listed in the case where the shortest aging time is 12 hours are described. In the evaluation of the dimensional stability, the case of symbols "A+" and "A" in which a molded article having good dimensional stability was obtained in an aging time of 3 hours or shorter was judged as acceptable, and the case of symbols "B" and "C" in which a molded article having good dimensional stability was not obtained in an aging time of 3 hours or shorter was judged as unacceptable.

[Recoverability]

In a plan view of the expanded beads molded article viewed in the thickness direction, a thickness of the expanded beads molded article at each of four positions about 10 mm inward from respective corners in the center direction and a thickness of the expanded beads molded article at the central portion were measured. Next, a ratio (unit: %) of the thickness of the thinnest portion to the thickness of the thickest portion among the measured portions was calculated. A case where the thickness ratio obtained in this manner was 99% or more was determined to be acceptable, and a case where the thickness ratio was less than 99% was determined to be unacceptable.

(Fusion-bonding rate of molded article)

The molded article was bent and broken near the center, and the total number of expanded beads present on the fracture surface and the number of expanded beads broken inside the expanded beads were counted. Then, a ratio (that is, material fracture rate) of the number of expanded beads that were broken inside the expanded beads to the total number of expanded beads, which exist on the fracture surface, was calculated. The above operation was performed on five molded articles, and the arithmetic average value of the material fracture rates in the five molded articles was described in the "fusion-bonding rate" column of Table 3 and Table 4. In the evaluation of the fusion-bonding rate, a case where the material fracture rate was 90% or more was determined to be acceptable, and a case where the material fracture rate was less than 90% was determined to be unacceptable.

(Appearance of molded article)

The surface of the molded article was visually observed, and the appearance was evaluated on the basis of the following criteria.

A: A good surface state in which there are a sufficiently small number of voids between beads on the surface of the molded article and irregularities caused by the through-holes and the like are not so noticeable is exhibited.

B: Irregularities caused by voids between beads and/or through-holes are slightly observed on the surface of the molded article.

C: Irregularities caused by voids between beads and/or through-holes are remarkably observed on the surface of the molded article.

(50% compressive stress of molded article)

A test piece having a prismatic shape of 50 mm long × 50 mm wide × 25 mm thick and not including a skin surface, that is, a surface in contact with the inner surface of the mold during in-mold molding was cut out from the central portion of the molded article. In accordance with JIS K 6767:1999, a 50% compressive stress of the molded article was obtained by performing a compression test at a compression rate of 10 mm/min.

[Table 2]

(Table 2)

| | | Unit | Expanded bead A | Expanded bead B | Expanded bead C | Expanded bead D | Expanded bead E | Expanded bead F | Expanded bead G |
|---|---|---|---|---|---|---|---|---|---|
| Resin particle | Resin of core layer | - | PE1 | PE1 | PE1 | PE1 | PE1 | PE1 | PE1 |
| | Resin of cover layer | - | PE2 | PE3 | PE2 | PE2 | PE2 | Absence | Absence |
| | Proportion of cover layer | mass% | 5 | 5 | 5 | 5 | 5 | - | - |
| | Antistatic agent | - | Presence | Presence | Presence | Absence | Absence | Absence | Absence |
| | Blending amount of antistatic agent | mass% | 30 | 30 | 30 | - | - | - | - |
| Production conditions of expanded bead | Foaming temperature | °C | 124.8 | 124.9 | 124.8 | 124.8 | 124.8 | 124.7 | 124.9 |
| | Pressure inside container | MPa(G) | 3.9 | 3.9 | 3.9 | 4 | 4 | 3.9 | 3.7 |
| | Second expanding step | - | Absence | Absence | Presence | Absence | Presence | Absence | Absence |
| Expanded bead | Bulk density | kg/m$^3$ | 45 | 45 | 19 | 45 | 19 | 42 | 42 |
| | Apparent density | kg/m$^3$ | 85 | 85 | 36 | 79 | 31 | 76 | 110 |
| | Heat of fusion of high-temperature peak | J/g | 25 | 24 | 25 | 25 | 25 | 25 | 26 |
| | Apparent density/bulk density | - | 1.89 | 1.89 | 1.89 | 1.74 | 1.67 | 1.81 | 2.62 |
| | Closed cell content | % | 97 | 97 | 96 | 98 | 98 | 98 | 95 |
| | Presence or absence of through-hole | - | Presence | Presence | Presence | Absence | Absence | Presence | Presence |
| | Average hole diameter d of through-holes | mm | 0.57 | 0.49 | 0.84 | - | - | 0.47 | 1.38 |
| | Average outer diameter D of expanded beads | mm | 3.8 | 4.1 | 5.3 | 4.16 | 5.25 | 4.34 | 3.79 |
| | d/D | - | 0.15 | 0.12 | 0.16 | - | - | 0.11 | 0.36 |
| | Average wall thickness t | mm | 1.63 | 1.81 | 2.25 | - | - | 1.94 | 1.21 |
| | t/D | - | 0.43 | 0.44 | 0.42 | - | - | 0.45 | 0.32 |

[Table 3]

(Table 3)

|  |  | Unit | Example 1 | Example 2 | Example 3 | Example 4 | Example 5 | Example 6 |
|---|---|---|---|---|---|---|---|---|
| Expanded bead | Type | - | Expanded bead A | Expanded bead B | Expanded bead C | Expanded bead C | Expanded bead A | Expanded bead F |
| Molding conditions | Molding pressure during main heating | MPa(G) | 0.10 | 0.10 | 0.10 | 0.10 | 0.10 | 0.10 |
|  | Presence or absence of pretreatment pressurization step | - | Absence | Absence | Presence | Presence | Presence | Absence |
|  | Internal pressure after pretreatment pressurization step | MPa(G) | - | - | 0.05 | 0.10 | 0.05 | - |
|  | Cracking amount | % | 20 | 20 | 10 | 10 | 10 | 20 |
|  | Water cooling time | Second | 33 | 37 | 30 | 26 | 63 | 35 |
| Molded article | Density | kg/m$^3$ | 63 | 64 | 23 | 24 | 56 | 60 |
|  | Fusion-bonding rate | % | 100 | 100 | 100 | 100 | 100 | 100 |
|  | 50% compressive stress | kPa | 305 | 309 | 123 | 124 | 277 | 296 |
|  | Closed cell content | % | 85.7 | 85.3 | 80.9 | 82.1 | 86.0 | 86.2 |
|  | Open cell content | % | 11.6 | 12.0 | 14.2 | 12.0 | 8.6 | 8.1 |
|  | Appearance | - | A | A | A | A | A | A |
|  | Evaluation of dimensional stability when employing short-time aging | - | A | A | A | A+ | A+ | A |

[Table 4]

(Table 4)

| | | Unit | Comparative Example 1 | Comparative Example 2 | Comparative Example 3 | Comparative Example 4 | Comparative Example 5 |
|---|---|---|---|---|---|---|---|
| Expanded bead | Type | - | Expanded bead D | Expanded bead E | Expanded bead E | Expanded bead C | Expanded bead G |
| Molding conditions | Molding pressure during main heating | MPa(G) | 0.10 | 0.08 | 0.10 | 0.14 | 0.10 |
| | Presence or absence of pretreatment pressurization step | - | Absence | Presence | Presence | Presence | Absence |
| | Internal pressure after pretreatment pressurization step | MPa(G) | - | 0.05 | 0.10 | 0.05 | - |
| | Cracking amount | % | 20 | 10 | 10 | 10 | 20 |
| | Water cooling time | Second | 110 | 77 | 90 | 114 | 5 |
| Molded article | Density | kg/m$^3$ | 66 | 23 | 23 | 23 | 60 |
| | Fusion-bonding rate | % | 100 | 100 | 10 | 100 | 70 |
| | 50% compressive stress | kPa | 327 | 128 | 120 | 123 | 243 |
| | Closed cell content | % | 92.5 | 85.7 | 87.2 | 68.9 | 70.5 |
| | Open cell content | % | 4.8 | 7.7 | 6.0 | 25.2 | 25.0 |
| | Appearance | - | A | A | A | C | C |
| | Evaluation of dimensional stability when employing short-time aging | - | C | C | B | A | A |

As shown in Table 3, the production method of Examples 1 to 6 can produce a molded article having a desired shape and being excellent in appearance and rigidity even in a short-time aging step. As understood from the comparison between Example 3 and Example 4 and the comparison between Example 1 and Example 5, by using the expanded beads, decrease in the fusion-bonding rate can be prevented even when the internal pressure applied to the expanded beads in the pretreatment pressurization step is increased, so that a good molded article can be obtained. Furthermore, when the amount of internal pressure applied to the expanded beads in the pretreatment pressurization step is increased, dimensional stability in a case where the aging time is shortened can be further improved.

It is noted that the proportion of the insoluble fraction in the expanded beads of Examples 1 to 6 by the thermal xylene extraction method was 0 mass%. The molded articles of Examples 1 to 5 each had a surface resistivity of less than $1 \times 10^{13}$ Ω. The surface resistivity of the molded article was measured in accordance with JIS K6271:2001.

On the other hand, as shown in Table 4, in the production methods of Comparative Example 1 and Comparative Example 2, a molded article was produced using expanded beads having no through-hole, and thus the open cell content of the molded article was too low. As a result, when the aging time was shortened, significant shrinkage and deformation of the molded article occurred (that is, the recoverability fails), and it was impossible to obtain a good molded article. In addition, the time required for cooling the molded article in the mold (water cooling time) was long.

Comparative Example 3 is an example in which molding was performed by increasing the amount of internal pressure applied in the pretreatment pressurization step in order to enhance the dimensional stability when employing short-time aging in Comparative Example 2. In Comparative Example 3, the dimensional stability when employing short-time aging was slightly improved, but was still insufficient. On the other hand, in Comparative Example 3, the fusion-bonding rate was significantly reduced as compared with Comparative Example 2, and a good molded article was not obtained.

Comparative Example 4 is an example in which a molded article was produced using the same expanded beads as in Example 1 under different molding conditions. In Comparative Example 4, probably because the molding pressure was slightly high and the expanded beads were likely to shrink, the open cell content of the resulting molded article was excessively high, and the appearance of the molded article was significantly deteriorated.

In Comparative Example 5, the average hole diameter of through-holes of the expanded beads exceeded 1 mm, the open cell content of the resulting molded article was excessively high, and the appearance of the molded article was significantly deteriorated.

Although the aspects of the polyethylene-based resin expanded beads molded article and the method for producing the same according to the present invention have been described above on the basis of Examples, the specific aspects of the polyethylene-based resin expanded beads molded article and the method for producing the same according to the present invention are not limited to the aspects of Examples, and the configuration can be appropriately changed without impairing the gist of the present invention.

**Claims**

1. A method for producing a molded article of polyethylene-based resin expanded beads in which the polyethylene-based resin expanded beads each having a tubular shape with a through-hole are filled into a mold and a heating medium is supplied thereto to fusion-bond the expanded beads to each other, wherein

   the expanded beads each have a foamed layer including a polyethylene-based resin,
   a closed cell content of the expanded beads is 80% or more,
   an average hole diameter d of the through-holes in the expanded beads is less than 1 mm, and a ratio [d/D] of the average hole diameter d to an average outer diameter D of the expanded beads is 0.4 or less, and
   an open cell content of the molded article is 8% or more and 20% or less.

2. The method for producing a molded article of polyethylene-based resin expanded beads according to claim 1, wherein an internal pressure of the expanded beads to be filled into the mold is 0 MPa (G) or more and 0.3 MPa (G) or less.

3. The method for producing a molded article of polyethylene-based resin expanded beads according to claim 1 or 2, wherein an internal pressure of the expanded beads to be filled into the mold is 0.02 MPa (G) or more and 0.3 MPa (G) or less.

4. The method for producing a molded article of polyethylene-based resin expanded beads according to any one of claims 1 to 3, wherein a melt mass flow rate MFRc of the polyethylene-based resin constituting the foamed layer is 0.1 *g/10* min or more and 5 g/10 min or less as measured under conditions of a temperature of 190°C and a load of 2.16 kg.

5. The method for producing a molded article of polyethylene-based resin expanded beads according to any one of claims 1 to 4, wherein the expanded beads each have a cover layer covering the foamed layer.

6. The method for producing a molded article of polyethylene-based resin expanded beads according to claim 5, wherein the cover layer includes a polyethylene-based resin, and a melting point of the polyethylene-based resin constituting the cover layer is lower than a melting point of the polyethylene-based resin constituting the foamed layer.

7. The method for producing a molded article of polyethylene-based resin expanded beads according to claim 5 or 6, wherein the cover layer includes a polyethylene-based resin, and a melt mass flow rate MFRs of the polyethylene-based resin constituting the cover layer is 8 g/10 min or more and 30 g/10 min or less as measured under conditions of a temperature of 190°C and a load of 2.16 kg.

8. The method for producing a molded article of polyethylene-based resin expanded beads according to any one of claims 5 to 7, wherein the cover layer includes a polyethylene-based resin, and a difference [MFRs - MFRc] between a melt mass flow rate MFRs of the polyethylene-based resin constituting the cover layer as measured under conditions of a temperature of 190°C and a load of 2.16 kg and a melt mass flow rate MFRc of the polyethylene-based resin constituting the foamed layer as measured under conditions of a temperature of 190°C and a load of 2.16 kg is 5 g/10 min or more and 25 g/10 min or less.

9. The method for producing a molded article of polyethylene-based resin expanded beads according to any one of claims 5 to 8, wherein the cover layer contains a polymeric antistatic agent, and a blending amount of the polymeric antistatic agent in the cover layer is 10 mass% or more and 45 mass% or less.

10. The method for producing a molded article of polyethylene-based resin expanded beads according to any one of claims 1 to 9, wherein an average wall thickness t of the expanded beads represented by the following equation (1) in which the average outer diameter D and the average hole diameter d are used is 1.2 mm or more and 3 mm or less:

$$T = (D - d)/2 \cdots (1)$$

11. The method for producing a molded article of polyethylene-based resin expanded beads according to any one of claims 1 to 10, wherein a density of the molded article is 10 kg/m$^3$ or more and 100 kg/m$^3$ or less.

12. A molded article of polyethylene-based resin expanded beads each having a tubular shape with a through-hole and fusion-bonded to each other, wherein

a closed cell content of the molded article is 80% or more, and
an open cell content of the molded article is 8% or more and 20% or less.

FIG. 1

FIG. 2

FIG. 3

FIG. 4

## INTERNATIONAL SEARCH REPORT

International application No.

**PCT/JP2023/044061**

### A. CLASSIFICATION OF SUBJECT MATTER

*C08J 9/228*(2006.01)i; *C08J 9/16*(2006.01)i
FI: C08J9/228 CES; C08J9/16

According to International Patent Classification (IPC) or to both national classification and IPC

### B. FIELDS SEARCHED

Minimum documentation searched (classification system followed by classification symbols)

C08J9/00-9/42; B29C44/00-44/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2012/081490 A1 (JSP CORP) 21 June 2012 (2012-06-21)<br>entire text | 1-12 |
| A | WO 2020/235290 A1 (JSP CORP) 26 November 2020 (2020-11-26)<br>entire text | 1-12 |
| P, A | WO 2022/270425 A1 (JSP CORP) 29 December 2022 (2022-12-29)<br>entire text | 1-12 |
| P, A | WO 2022/270426 A1 (JSP CORP) 29 December 2022 (2022-12-29)<br>entire text | 1-12 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/044061**

| Patent document cited in search report | | | Publication date (day/month/year) | Patent family member(s) | | | Publication date (day/month/year) |
|---|---|---|---|---|---|---|---|
| WO | 2012/081490 | A1 | 21 June 2012 | US | 2013/0266792 | A1 | |
| | | | | EP | 2653283 | A1 | |
| | | | | CN | 103249537 | A | |
| | | | | TW | 201238737 | A | |
| WO | 2020/235290 | A1 | 26 November 2020 | US | 2022/0235216 | A1 | |
| | | | | EP | 3970959 | A1 | |
| | | | | CN | 113795362 | A | |
| | | | | TW | 202106778 | A | |
| WO | 2022/270425 | A1 | 29 December 2022 | TW | 202309177 | A | |
| WO | 2022/270426 | A1 | 29 December 2022 | TW | 202311389 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022141166 A
- JP 2003039565 A
- JP 60166442 A
- JP 4046217 B